(19) **Europäisches Patentamt / European Patent Office / Office européen des brevets**

(11) **EP 4 189 235 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **20760382.0**

(22) Anmeldetag: **27.07.2020**

(51) Internationale Patentklassifikation (IPC):
**F03D 3/00** (2006.01)   **F03D 3/06** (2006.01)
**B63H 1/08** (2006.01)   **B64C 27/78** (2006.01)
**F03B 17/06** (2006.01)

(52) Gemeinsame Patentklassifikation (CPC):
**F03D 3/005; B63H 1/08; B64C 11/006;**
**F03B 17/067; F03D 3/068;** F05B 2250/232;
F05B 2250/72; F05B 2260/503; F05B 2260/5032;
F05B 2260/75; Y02E 10/20; Y02E 10/72;
Y02E 10/74

(86) Internationale Anmeldenummer:
**PCT/DE2020/100671**

(87) Internationale Veröffentlichungsnummer:
**WO 2021/018353 (04.02.2021 Gazette 2021/05)**

(54) **UNIVERSALPROPELLER, BETRIEBSVERFAHREN SOWIE FAVORISIERTE VERWENDUNGEN**

UNIVERSAL PROPELLER, OPERATING METHOD AND FAVOURED USES

HÉLICE UNIVERSELLE, PROCÉDÉ DE FONCTIONNEMENT ET UTILISATIONS PRIVILÉGIÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.06.2023 Patentblatt 2023/23**

(73) Patentinhaber: **Chennupati, Siva Raghuram Prasad**
**85716 Unterschleißheim (DE)**

(72) Erfinder: **Chennupati, Siva Raghuram Prasad**
**85716 Unterschleißheim (DE)**

(74) Vertreter: **Heilein, Ernst-Peter**
**HEILEIN IP LAW**
**Bezirksstraße 2**
**85716 Unterschleissheim (DE)**

(56) Entgegenhaltungen:
WO-A1-03/062671     FR-A- 1 021 252
GB-A- 2 495 745     US-A- 4 355 956

**Beschreibung**

Die vorliegende Erfindung betrifft einen neuartigen Universalpropeller mit einer Nabe, welche auf einer Welle drehbar gelagert ist, wobei an der Nabe zwei Rotorblätter zueinander gegenüberliegend oder wenigstens drei Rotorblätter zueinander sternförmig angeordnet sind; wobei ein jedes Rotorblatt am Ende seiner Längsachse dergestalt unter einem Winkel α zur Mittelachse der Welle an der Nabe angeordnet ist, dass die Längsachse eines jeden Rotorblatts bei Rotation um 360° die Mantelfläche eines geraden Kreiskegels beschreibt; wobei die Nabe ein Steuerungsgetriebe umfasst, mittels dessen eine Drehung der Rotorblätter um ihre Längsachse ermöglicht ist; wobei an jedem Rotorblatt ein Zahnrad angeordnet ist, welches mit einem Referenzzahnrad des Steuerungsgetriebes in unmittelbarer Wirkverbindung steht; und wobei das Steuerungsgetriebe mit einem Nabengetriebe wirkverbunden ist, wobei das Nabengetriebe eingerichtet ist, eine Winkelgeschwindigkeit einer Rotationsbewegung der Nabe aufzunehmen und zu verarbeiten.

Die vorliegende Erfindung betrifft darüber hinaus ein Verfahren zum Betrieb eines derartigen Universalpropellers sowie favorisierte Verwendungen.

Ein Propeller (von lateinisch *propellere* ‚vorwärts treiben') ist ein Maschinenelement einer Antriebsmaschine mit Flügeln (im Folgenden als Rotorblätter bezeichnet), die meist um eine Welle radial (sternförmig) herum angeordnet sind.

In der Fluiddynamik oder der Aerodynamik werden Propeller verwendet, um eine Bewegung in dem Fluid zu erzeugen; oder es wird ein sich bewegendes Fluid verwendet, um den Propeller anzutreiben. Typische Anwendungen für Bewegungen in einem Fluid sind Verwendungen von Propellern als Schiffsschraube. Bei Flugzeugen wird der Propeller gelegentlich als Luftschraube bezeichnet; bei Hubschraubern dominiert die Tragwirkung den Vortrieb, man spricht dort von Rotor. Typische Anwendungen für durch ein sich bewegendes Fluid angetriebene Propeller sind Wind- oder Wasserkraftanlagen, die nach dem gleichen Prinzip arbeiten, bloß umgekehrt der Luft- bzw. Wasserströmung Leistung entziehen, statt sie für den Vortrieb bzw. Auftrieb (A) zu erzeugen. Derartig verwendete Propeller werden auch als Repeller bezeichnet.

Erste Propeller für Windkraftanlagen stammen aus dem 11. Jahrhundert und sind fast 1000 Jahre alt. Auch in aktuellen Windkraftanlagen mit horizontaler Achse (HAWT) geht dabei die Widerstandskomponente (W) der Windenergie verloren und nur die Auftriebskomponente (A) wird zur Energieerzeugung aus der Luftströmung genutzt. Zur Leistungserhöhung wurden insbesondere die Rotordurchmesser immer größer, denn eine Verdopplung der Rotorblattlänge bewirkt gemäß der Kreisformel eine Vervierfachung der Rotorfläche. Noch bis Ende der 1990er Jahre lag der Durchmesser neu errichteter Anlagen meist unter 50 Meter, nach etwa 2003 meist zwischen 60 und 90 Meter. Bis 2018 wuchs der durchschnittliche Rotordurchmesser auf 118 m, die durchschnittliche Nabenhöhe auf 132 m. Nachteilig zu dieser Entwicklung sind die gestiegenen Havarien an Windkraftanlagen durch Wind- oder Sturmböen.

Sogenannte Savonius-Rotoren oder Vertikalachsen-Windkraftanlagen (VAWT) bauen gegenüber HAWT-Anlagen deutlich weniger ausladend auf, verwenden aber nur Widerstandskomponenten (W) und verschwenden dabei die gesamten Auftriebskomponenten (A).

Im Betrieb sehen sich viele VAWT-Anlagen dem Problem gegenüber, erst ab einer bestimmten Windgeschwindigkeit, der sog. Anlauf- oder Einschaltgeschwindigkeit, rentabel laufen zu können. Bei Windgeschwindigkeiten unterhalb der Anlaufgeschwindigkeit wird die VAWT-Anlage in einen Leerlauf versetzt, wobei die Regelelektronik und die Stellantriebe beispielsweise für die Rotorblattverstellung trotzdem mit Strom versorgt werden müssen, wodurch die Anlage zu einem Stromverbraucher wird. Um diesem Problem zu begegnen ist aus der EP 1 626 176 A2 eine, einem Savonius-Rotor ähnliche, Windkraftanlage bekannt, welche auf ihren vertikal angeordneten Rotorblättern Solarwandler zur Wandlung von Sonnenenergie in eine der Sonnenenergie unterschiedliche Energieform, vorzugsweise in elektrische Energie, vorsieht. Die durch die Solarwandler erzeugte Energie kann die Anlage bei niedrigen Windgeschwindigkeiten vorteilhaft versorgen, wodurch die beschriebene Anlage auch unterhalb der Anlaufgeschwindigkeit vom Stromnetz autark betrieben werden kann.

Eine alternative Möglichkeit zur Lösung des Problems der Anlaufgeschwindigkeit bei VAWT-Anlagen ist die Gewährleistung einer möglichst optimalen Ausrichtung der Rotorblätter zum Wind- bzw. Fluidstrom. In der WO 2017/187 229 A1 wird dazu eine VAWT-Windkraftanlage offenbart, welche eine Vielzahl von Rotorblättern umfasst, die zum einen gegenüber der vertikalen Hauptrotationsachse um einen Winkel von 30° - 60° ausgelenkt sind und zum anderen ein spezielles aerodynamisches Profil aufweisen, wodurch ein sog. "sekundärer induzierter Fluß" erzeugt werden soll, welcher die aerodynamische Effizienz der beschriebenen Anlage vorteilhaft erhöht. Die Rotorblätter selbst sind dabei starr mit der Nabe der hier beschriebenen VAWT-Anlage verbunden. Aus der US 4 355 956 A ist dagegen eine VAWT-Anlage bekannt geworden, welche ebenfalls aus der Vertikalen ausgelenkte Rotorblätter aufweist, die sich allerdings nicht durch ein besonderes Profil, sondern durch ihre Materialbeschaffenheit auszeichnen. Die beschriebenen Rotorblätter sind aus einem flexiblen Material hergestellt und dadurch bis zu einem gewissen Grad selbsttrimmend, d.h. sie können ihre Richtung als Reaktion auf den Winddruck und ihre eigene Rückstellkraft in einem bestimmten Umfang selbstständig ändern. Die Rotorblätter sind auch hier starr mit der Nabe der beschriebenen VAWT-Anlage verbunden.

Aus der US 2011/0 076 144 A1 und der WO 2014/188 289 A1 sind darüber hinaus Turbinen- bzw. Propeller-Vorrichtungen bekannt geworden, welche eine mechanische Ausrichtung ihrer Rotorblätter zum Wind- bzw. Fluidstrom vorsehen. In der CN 105 863 957 A und der GB 2 495 745 A sind schließlich VAWT-Anlagen mit bezüglich einer vertikalen Rotationsachse ausgelenkten Rotorblättern offenbart, bei denen der Anstellwinkel der Rotorblätter bis zu einem gewissen Grad ebenfalls mechanisch zur Windströmung ausgerichtet werden kann. Die CN 105 863 957 A sieht zur Variation der Anstellwinkel der Rotorblätter eigenständige Antriebe, wie insbesondere Elektromotoren oder einen Pneumatik-Antrieb vor. In der GB 2 495 745 A ist dazu schließlich ein Planetengetriebe vorgesehen, welches eingerichtet ist, während einer Drehung einer Nabe samt daran angeordneter Rotorblätter um 360°, die Rotorblätter selbst jeweils um 180° um ihre Längsachse relativ zur Nabe zu drehen. Allerdings beschränkt die vorgesehene Getriebekonfiguration das Größenverhältnis der mit den Rotorblättern verbundenen Zahnrädern zum zentralen stationären Zahnrad, dem Sonnenrad, auf 2 zu 1, was bei einer Erhöhung der Anzahl an Rotorblättern schnell zu einer sehr großen Getriebeausdehnung und damit nachteilig zu einer kritischen Nabengröße führt. Bereits allein die Anordnung von lediglich drei Rotorblättern an einer Nabe kann bei den Getriebekonstruktionen des Stands der Technik in bestimmten Fällen problematisch sein.

In der FR 1 021 252 A werden ein Windmotor bzw. eine Windkraftanlage beschrieben. Besagter Windmotor ist erfindungsgemäß so ausgelegt, dass sich die angetriebene Welle unabhängig von der Windgeschwindigkeit zwischen zwei vorgegebenen Extremgrenzen mit einer konstante Windgeschwindigkeit bewegt und den Betrieb einstellt, sobald die Windgeschwindigkeit einen Wert erreicht, welcher jenseits besagter Extremgrenzen liegt. Der in der FR 1 021 252 A beschriebene Windmotor umfasst dazu ein Motorengehäuse, an dem eine Mehrzahl von Rotorblättern angeordnet und drehbar gelagert und deren Achsen in besagtes Gehäuse hineingeführt sind. An den innerhalb des Gehäuses befindlichen Enden besagter Achsen sind Zahnräder angeordnet, welche mit einem zentralen Zahnrad in Wirkverbindung stehen. Dieses zentrale Zahnrad wiederum ist eingerichtet, eine auf es ausgeübte Kraft über eine Anordnung weitere Zahnräder im Inneren des Gehäuses schließlich auf die Antriebswelle zu übertragen. Besagte Rotorblätter soll hierbei in ihrer Bewegung derart eingeschränkt werden, dass sie bei einer vollständigen Umdrehung der Antriebswelle eine halbe Umdrehung um ihre eigene Längsachse ausführen, wobei der Keilwinkel der Rotorblätter in Bezug auf die Nabe festgelegt ist.

Aus der WO 03/062671 A1 ist schließlich eine Vorrichtung bekannt, welche einerseits zur Umwandlung der Bewegungsenergie eines Fluids wie Wasser oder Luft in eine Drehbewegung von Rotoren und andererseits zur Strömungsleitung besagten Fluids eingerichtet ist. Sie umfasst ein Antriebsmittel, welches auf einem festen Träger montiert ist, der als Halterung fungiert, wobei das Antriebsmittel kinematisch durch ein Übertragungsmittels (Riemenantrieb, Kettengetriebe und dergleichen) mit einer Hohlwelle verbunden ist, und wobei die Hohlwelle durch ein Lager in dem festen Träger befestigt und starr mit einer Abdeckung eines Gehäuses verbunden ist. An besagtem Gehäuse ist zudem ein Rotorblatt über ein erstes Zahnrad drehbar gelagert, wobei das erste Zahnrad wiederum mit einem zweiten Zahnrad in Eingriff steht, das mit einer Einstellwelle in Wirkverbindung ist, wobei das zweite Zahnrad und das erste Zahnrad ein Verhältnis der Zähnezahl von 2:1 aufweisen. Die in der WO 03/062671 A1 offenbarte Vorrichtung soll vorteilhaft eine Umwandlung einer Drehbewegung der Hohlwelle und dem daran fixierten Gehäuse in eine komplexe Bewegung, insbesondere eine konische Trajektorie, des Rotorblattes ermöglichen, wobei während des gesamten Bewegungszyklus eine konstante kinematische Verbindung zwischen Hohlwelle und einer Achse des Rotorblatts und eine Proportionalität zwischen der Winkelbeschleunigung besagter Achse bezüglich der konischen Trajektorie bzw. bezüglich zur Eigenrotation der Hohlwelle gewährleistet ist.

Hiervon ausgehend liegt der vorliegenden Erfindung die Aufgabe zugrunde, einen im Vergleich zum Stand der Technik verbesserten Propeller bereitzustellen, welcher insbesondere kompakter als herkömmliche Propeller baut, dabei die Anordnung einer möglichst großen Zahl von Rotorblättern erlaubt, bevorzugt sowohl Auftriebs- (A) als auch Widerstandskomponenten (W) nutzt und besonders bevorzugt universell gleichermaßen zur Energieerzeugung durch Wind- oder Wasserkraft als auch als Antrieb für Schiffs- oder Fluggeräte geeignet ist.

Diese Aufgabe wird durch einen Universalpropeller mit den Merkmalen des Patentanspruchs 1 gelöst. Weitere vorteilhafte Ausgestaltungen und Weiterbildungen, welche einzeln oder in Kombination miteinander einsetzbar sind, sind Gegenstand der abhängigen Ansprüche.

Der erfindungsgemäße Universalpropeller zeichnet sich gegenüber gattungsbildenden Propellern dadurch aus,

- dass das Referenzzahnrad zentral im Steuerungsgetriebe angeordnet und von den Zahnrädern der Rotorblätter umgeben ist und dass das Referenzzahnrad und die Zahnräder der Rotorblätter des Steuerungsgetriebes so ausgelegt sind, dass sich das Verhältnis einer Winkelgeschwindigkeit $\omega_r$ des Referenzzahnrads zur Winkelgeschwindigkeit $\omega_n$ der Rotationsbewegung der Nabe verhält wie: $\omega_r / \omega_n = 1 + (1/2) * (S_{rot} / S_r)$ mit $S_{rot}$ = Größe der Zahnräder der Rotorblätter und $S_r$ = Größe des Referenzzahnrads;
  oder
- dass das Referenzzahnrad, außerhalb des Zentrums des Steuerungsgetriebes angeordnet ist und seinerseits die Zahnräder der Rotorblätter umgibt und dass das Referenzzahnrad und die Zahnräder der Rotorblätter des Steuerungsgetriebes so ausgelegt sind, dass sich das Verhältnis einer Winkelgeschwindigkeit $\omega_r$ des Referenzzahnrads zur Winkelgeschwindigkeit $\omega_n$ der Rotationsbewegung der Nabe verhält wie: $\omega_r / \omega_n = 1 - (1/2) * (S_{rot} / S_r)$ mit $S_{rot}$ = Größe der Zahnräder der Rotorblätter und $S_r$ = Größe des Referenzzahnrads.

Als Parameter zur Bestimmung der Größe eines Zahnrads können hierbei insbesondere dessen Radius, dessen Durchmesser und/oder die Anzahl der Zähne des jeweiligen Zahnrads verwendet werden.

Zudem soll im Rahmen dieser Erfindung unter dem Begriff "Zahnrad" neben konventionellen Zahnrädern mit sichtbar ausgebildeten Zähnen verschiedenster Form und verschiedenstem Material auch sog. "friction gears", also einander berührende, nicht gleitende Getrieberäder, verstanden werden, welche beispielsweise aus Gummi gefertigt sein und einander über Kraftschluss antreiben können.

Durch die erfindungsgemäße Auslegung des Referenzzahnrades und der Zahnräder der Rotorblätter des Steuerungsgetriebes gemäß einer der oben angegebenen Formeln kann zum einen vorteilhaft im Steuerungsgetriebe auf das Vorsehen von Richtungsrädern zwischen Referenzrad und den Zahnrädern der Rotorblätter - anders als im Stand der Technik - verzichtet werden und so eine unmittelbare Wirkverbindung zwischen Referenzzahnrad und den Zahnrädern der Rotorblätter realisiert werden, was eine kompaktere Bauweise der Nabe ermöglicht. Zum anderen erlaubt das Zusammenspiel von Steuerungsgetriebe und Nabengetriebe gemäß einer der oben angegebenen Formeln - im Gegensatz zum Stand der Technik - auf Größenvorgaben bezüglich der im Steuerungsgetriebe verwendeten Zahnräder, also dem Referenzzahnrad und den Zahnrädern der Rotorblätter vorteilhaft zu verzichten, was nicht nur die Anordnung von mehr als drei Rotorblättern an der Nabe ermöglicht, sondern die Nabenkonstruktion auch kompakt, robust und flexibel macht. Die Anzahl der tatsächlich an der Nabe eines erfindungsgemäß aufgebauten Universalpropellers angeordneten Rotorblätter kann dadurch vorteilhaft auf die jeweilige Anwendung, insbesondere in Windkraftanlagen, Wasserkraftanlagen oder in einer Antriebsmaschine eines Schiffes oder eines Flugzeugs, abgestimmt werden.

Indem die Längsachse eines jeden Rotorblatts bei Rotation um 360° die Mantelfläche eines geraden Kreiskegels beschreibt ist zudem ein kompakt bauender Propeller bereitgestellt, wobei ein jedes Rotorblatt bei Rotation entlang der Mantelfläche eines geraden Kreiskegels abwechselnd sowohl Auftriebs- (A) als auch Widerstandskomponenten (W) auszunutzen vermag.

In derjenigen Form der Erfindung in welcher das Referenzzahnrad zentral im Steuerungsgetriebe angeordnet und von den Zahnrädern der Rotorblätter umgeben ist, dieser "Innenkonfiguration" sind das Referenzzahnrad und die Zahnräder der Rotorblätter des Steuerungsgetriebes so ausgelegt, dass sich das Verhältnis einer Winkelgeschwindigkeit $\omega_r$ des Referenzzahnrads zur Winkelgeschwindigkeit $\omega_n$ der Rotationsbewegung der Nabe verhält wie: $\omega_r / \omega_n = 1 + (1/2) * (S_{rot} / S_r)$ mit $S_{rot}$ = Größe der Zahnräder der Rotorblätter und $S_r$ = Größe des Referenzzahnrads. Die "Innenkonfiguration" ermöglicht vorteilhaft die Auswahl diverser Zahnradkombinationen mit verschiedenen Zahnradgrößen von Referenzzahnrad und den Zahnrädern der Rotorblätter und erlaubt die Anordnung einer Vielzahl an Rotorblättern an der Nabe, wobei das konkret zu wählende Größenverhältnis von Referenzzahnrad zu den Zahnrädern der Rotorblätter entsprechend der in Additionsschreibweise obengenannten Formel und in Abhängigkeit der gewählten Anzahl an Rotorblättern bestimmt werden kann. In dieser "Innenkonfiguration" dreht sich das Referenzzahnrad schneller als die Nabe.

Alternativ dazu sind in derjenigen Form der Erfindung in welcher das Referenzzahnrad außerhalb des Zentrums des Steuerungsgetriebes angeordnet ist und seinerseits die Zahnräder der Rotorblätter umgibt, dieser "Außenkonfiguration" sind das Referenzzahnrad und die Zahnräder der Rotorblätter des Steuerungsgetriebes so ausgelegt, dass sich das Verhältnis einer Winkelgeschwindigkeit $\omega_r$ des Referenzzahnrads zur Winkelgeschwindigkeit $\omega_n$ der Rotationsbewegung der Nabe verhält wie: $\omega_r / \omega_n = 1 - (1/2) * (S_{rot} / S_r)$ mit $S_{rot}$ = Größe der Zahnräder der Rotorblätter und $S_r$ = Größe des Referenzzahnrads. Diese "Außenkonfiguration" ist bezüglich der Anzahl an Rotorblättern und der möglichen Zahnradkombinationen ebenso flexibel wie die "Innenkonfiguration", führt jedoch zusätzlich vorteilhaft zu einem geringeren Verschleiß bzw. einer geringeren Abnutzung der Getrieberäder. Gemäß der in Subtraktionsschreibweise obengenannten Formel dreht sich das Referenzzahnrad in der "Außenkonfiguration" langsamer als die Nabe.

In einer ersten Ausgestaltung der Erfindung ist das Nabengetriebe vorteilhaft als Planetengetriebe oder einfaches Zahnradgetriebe ausgestaltet.

In einer weiteren Ausgestaltung der Erfindung ist das Referenzzahnrad bevorzugt als ein Umlaufrad, ein Tellerrad oder ein Kronenrad ausgebildet; wobei das Referenzzahnrad, außerhalb des Zentrums des Steuerungsgetriebes angeordnet ist und seinerseits die Zahnräder der Rotorblätter umgibt und wobei das Referenzzahnrad und die Zahnräder der Rotorblätter so ausgelegt sind, dass sich das Verhältnis einer Winkelgeschwindigkeit $\omega_r$ des Referenzzahnrads zur Winkelgeschwindigkeit $\omega_n$ der Rotationsbewegung der Nabe verhält wie: $\omega_r / \omega_n = 1 - (1/2) * (S_{rot} / S_r)$ mit $S_{rot}$ = Größe der Zahnräder der Rotorblätter und $S_r$ = Größe des Referenzzahnrads.

In einer weiteren Ausgestaltung der Erfindung kann die Längsachse eines jeden Rotorblattes zur Mittelachse der Welle in einem Winkel $\alpha$ zwischen 30° und 60°oder zwischen 35° und 55° oder zwischen 40° und 50° angeordnet sein. Erfindungsgemäß bevorzugt hat sich eine Anordnung unter 45° bewährt, welche gleichermaßen Auftriebs- (A) als auch Widerstandskomponenten (W) vorteilhaft maximal ausnutzt.

In diesem Zusammenhang hat sich bewährt, wenn ein jedes Rotorblatt beim Drehen der Nabe um die Welle in einem ersten Durchtrittspunkt (T1) zu einer senkrechten Ebene (x, z) eines auf den Universalpropeller bezogenen Raumkoordinatensystems (x, y, z) ausgerichtet ist. Die Ausrichtung der Rotorblätter zu einer senkrechten Ebene, welche bevorzugt senkrecht zu einer Luft- oder Wasserströmung steht, nutz vorteilhaft Widerstandskomponenten (W) in ihrem (theoretischen) Maximum aus.

Dabei können im ersten Durchtrittspunkt (T1) die Längsachse eines jeden Rotorblatts eine Vertikal-Abweichung von bis zu +/- 15° innerhalb der senkrechten Ebene (x, z) aufweisen.

Kumulativ dazu hat sich bewährt, wenn ein jedes Rotorblatt beim Drehen der Nabe um die Welle in einem dritten Durchtrittspunkt (T3) zu einer horizontalen Ebene (x, y) eines auf den Universalpropeller bezogenen Raumkoordinatensystems (x, y, z) ausgerichtet ist. Die Ausrichtung der Rotorblätter zu einer horizontalen Ebene, welche bevorzugt parallel zu einer Luft- oder Wasserströmung steht, nutz vorteilhaft Auftriebskomponenten (A) in ihrem (theoretischen) Maximum aus.

Dabei können im dritten Durchtrittspunkt (T3) die Längsachse eines jeden Rotorblatts eine Horizontal-Abweichung von bis zu +/- 15° außerhalb der horizontalen Ebene (x, y) aufweisen.

In einer weiteren bevorzugten Ausgestaltung der Erfindung hat sich bewährt, wenn ein jedes Rotorblatt wenigstens abschnittsweise zwei im Wesentlichen ebene Oberseiten aufweist.

Im Wesentlichen ebene Oberseiten ermöglichen vorteilhaft darauf die Anordnung von Solarzellen für zusätzliche Stromerzeugung aus Solarenergie.

In einer weiteren bevorzugten Ausgestaltung der Erfindung hat sich bewährt, wenn die Seitenkanten eines jeden Rotorblattes gerundet oder konisch ausgebildet sind. Gerundete oder konisch ausgebildete Seitenkanten haben verringerte bzw. minimierte Widerstandsbeiwerte zum Vorteil.

Zur Vermeidung von Leistungsverminderung aufgrund von Vibrationen der Rotorblätter hat sich bewährt, wenn nebeneinander- und/oder gegenüber-liegende Rotorblätter über Seilzüge miteinander verbunden sind. Dabei können die Seilzüge zwischen einer mittigen und einer endseitigen Lage am Rotorblatt, vorzugsweise im Bereich oder benachbart ihrer Rotorblattspitzen, angebracht sein. Derartige Seilzüge geben den Rotorblättern vorteilhaft zusätzliche Stabilität, Stützung und Festigkeit.

Die vorliegende Erfindung eignet sich insbesondere für Montagen, bei der die Mittelachse der Welle unter einem Winkel β zwischen 0° und 360°, bevorzugt von 45°, zu einer Horizontalen (X) eines auf den Universalpropeller bezogenen Montagekoordinatensystems (X, Y, Z) montiert ist. Eine Montage unter einem Winkel β = 45° ermöglicht vorteilhaft Montagen erfindungsgemäßer Universalpropeller auf einer Bergspritze, einem Spitz- oder Flachdach oder sogar an einer Gebäudewand oder einer vergleichbaren vertikalen Ebene. Aber auch bei klassischen Mastmontagen ermöglicht eine Montage der Mittelachse der Welle unter einem Winkel β = 45° vorteilhaft eine Montage erfindungsgemäßer Universalpropeller weg vom Mast, wodurch vorteilhaft Beschädigungen oder Brüche von Rotorblättern am Mast, wie diese insbesondere bei bekannten HAWT-Anlagen während starker Wind- oder Sturmböen regelmäßig auftreten, vermieden sind.

Die vorliegende Erfindung betrifft darüber hinaus ein Verfahren zum Betrieb eines Universalpropellers wie zuvor beschrieben, bei dem über ein Getriebe eine Drehung der Rotorblätter um ihre Längsachse synchron zur Rotation der Rotorblätter um 360° entlang der Mantelfläche eines Kreiskegels erfolgt.

In einer Ausgestaltung des Verfahrens hat sich bewährt, wenn die Drehgeschwindigkeit der Rotorblätter um ihre Längsachse halb so hoch ist wie die Rotationsgeschwindigkeit der Rotorblätter um 360° entlang der Mantelfläche des Kreiskegels. Somit ist die Rotationsgeschwindigkeit der Rotorblätter entlang der Mantelfläche des Kreiskegels synchron zur Rotationsgeschwindigkeit der Nabe bzw. dem gesamten Universalpropeller. Demgegenüber drehen die Rotorblätter um ihre Längsachse vorzugsweise entgegen der Rotationsrichtung der Rotorblätter um 360° entlang der Mantelfläche des Kreiskegels. Dies hat zum Vorteil, dass die Rotorblätter beim Rotieren um 360° entlang der Mantelfläche des Kreiskegels stetig zur Ausnutzung maximaler Auftriebs- (A) beziehungsweise Widerstandskomponenten (W) ausgerichtet sind.

Die vorliegende Erfindung eignet sich insbesondere für favorisierte Verwendungen wie die Verwendung in einer Windkraftanlage, Wasserkraftanlage oder einer Antriebsmaschine eines Schiffes oder eines Flugzeugs.

Zusätzliche Einzelheiten und weitere Vorteile der Erfindung werden nachfolgend an Hand bevorzugter Ausführungsbeispiele, auf welche die vorliegende Erfindung jedoch nicht beschränkt ist, und in Verbindung mit der beigefügten Zeichnung beschrieben.

Darin zeigen schematisch:

Fig. 1        einen Universalpropeller in einer perspektivischen Ansicht;

Fig. 2        den Universalpropeller aus Fig. 1 in einer Seitenansicht;

Fig. 3        einen sich durch Rotation eines jeden Rotorblattes ergebender Kreiskegel mit vier exemplarisch ausgewählten Durchtrittspunkten T1, T2, T3 und T4;

Fig. 4        einen Universalpropeller in einer Seitenansicht mit abgerundeten Rotorblattspitzen;

Fig. 5        eine Übersicht denkbarer Rotorblatt-Profile;

Fig. 6 bis 18    diverse Montagesituationen und Anwendungsfälle eines Universalpropellers nach der Erfindung,

Fig. 19    ein Beispiel eines Steuerungsgetriebes aus dem Stand der Technik;

Fig. 20    in einer Schnittdarstellung einen Propeller mit einem Steuerungsgetriebe in der "Innenkonfiguration"; und

Fig. 21    in einer Schnittdarstellung einen Propeller mit einem Steuerungsgetriebe in der "Außenkonfiguration".

Bei der nachfolgenden Beschreibung bevorzugter Ausführungsformen der vorliegenden Erfindung bezeichnen gleiche Bezugszeichen gleiche oder vergleichbare Komponenten.

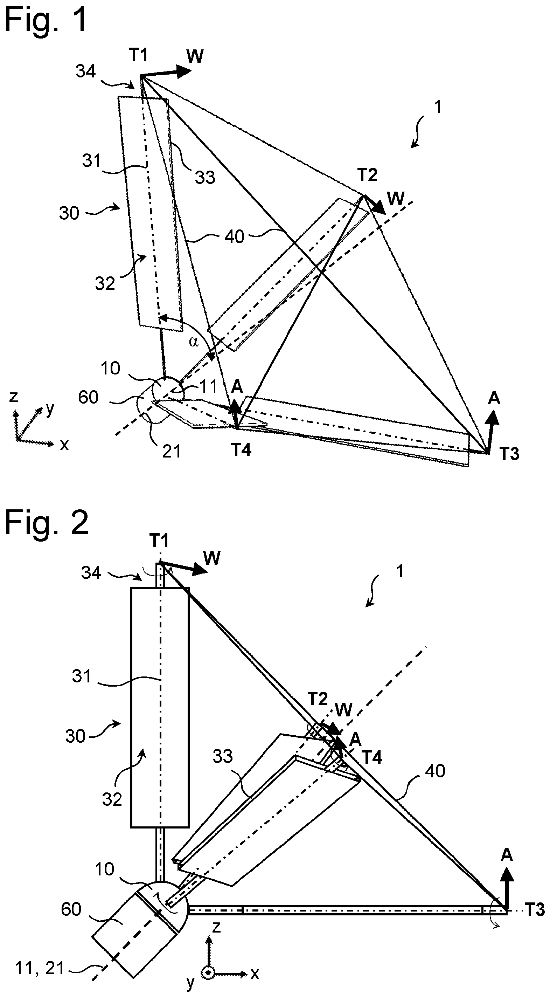

**Fig. 1** zeigt einen Universalpropeller 1 in einer perspektivischen Ansicht. Der dargestellte Universalpropeller 1 umfasst eine Nabe 10, welche auf einer Welle 20 drehbar gelagert ist. An der Nabe 10 sind entweder zwei Rotorblätter 30 zueinander gegenüberliegend oder wenigstens drei Rotorblätter 30 zueinander sternförmig angeordnet. Dargestellt ist ein besonders bevorzugtes Ausführungsbeispiel mit vier sternförmig angeordneten Rotorblättern 30, wobei erfindungsgemäß ein jedes Rotorblatt 30 am Ende seiner Längsachse 31 dergestalt unter einem Winkel α zur Mittelachse 21 der Welle 20 an der Nabe 10 angeordnet ist, dass die Längsachse 31 eines jeden Rotorblatts 30 bei Rotation um 360° die Mantelfläche 71 eines geraden Kreiskegels 70 beschreibt.

**Fig. 2** zeigt den Universalpropeller 1 aus Fig. 1 in einer Seitenansicht. Erkennbar ist, wie dadurch, dass die Längsachse 31 eines jeden Rotorblatts 30 bei Rotation um 360° die Mantelfläche 71 eines geraden Kreiskegels 70 beschreibt, ein kompakt bauender Propeller 1 bereitgestellt ist, wobei ein jedes Rotorblatt 30 bei Rotation entlang der Mantelfläche 71 eines geraden Kreiskegels 70 abwechselnd sowohl Auftriebs- A als auch Widerstandskomponenten W (durch fette Pfeile verdeutlicht) auszunutzen vermag.

In einer Ausgestaltung der Erfindung kann die Längsachse 31 eines jeden Rotorblattes 30 zur Mittelachse 21 der Welle 20 in einem Winkel α zwischen 30° und 60°oder zwischen 35° und 55° oder zwischen 40° und 50° angeordnet sein. Erfindungsgemäß bevorzugt hat sich - wie dargestellt - eine Anordnung unter 45° bewährt, welche gleichermaßen Auftriebs- A als auch Widerstandskomponenten W vorteilhaft maximal ausnutzt.

In diesem Zusammenhang hat sich bewährt, wenn ein jedes Rotorblatt 30 beim Drehen der Nabe 10 um die Welle 20 in einem ersten Durchtrittspunkt T1 zu einer senkrechten Ebene (x, z) eines auf den Universalpropeller 1 bezogenen Raumkoordinatensystems (x, y, z) ausgerichtet ist. Die Ausrichtung der Rotorblätter 30 zu einer senkrechten Ebene, welche bevorzugt senkrecht zu einer Luft- oder Wasserströmung steht, nutz vorteilhaft Widerstandskomponenten W in ihrem (theoretischem) Maximum aus.

Dabei können im ersten Durchtrittspunkt T1 die Längsachse 31 eines jeden Rotorblatts 30 eine Vertikal-Abweichung von bis zu +/- 15° innerhalb der senkrechten Ebene (x, z) aufweisen (nicht dargestellt).

Kumulativ dazu hat sich bewährt, wenn ein jedes Rotorblatt 30 beim Drehen der Nabe 10 um die Welle 20 in einem dritten Durchtrittspunkt T3 zu einer horizontalen Ebene (x, y) eines auf den Universalpropeller 1 bezogenen Raumkoordinatensystems (x, y, z) ausgerichtet ist. Die Ausrichtung der Rotorblätter 30 zu einer horizontalen Ebene, welche bevorzugt parallel zu einer Luft- oder Wasserströmung steht, nutz vorteilhaft Auftriebskomponenten A in ihrem (theoretischen) Maximum aus.

Dabei können im dritten Durchtrittspunkt T3 die Längsachse 31 eines jeden Rotorblatts 30 eine Horizontal-Abweichung von bis zu +/- 15° außerhalb der horizontalen Ebene (x, y) aufweisen (nicht dargestellt).

Zur Vermeidung von Leistungsverminderung aufgrund von Vibrationen der Rotorblätter 30 hat sich bewährt, wenn nebeneinander- und/oder gegenüber-liegende Rotorblätter 30 über Seilzüge 40 miteinander verbunden sind. Dabei können die Seilzüge 40 zwischen einer mittigen und einer endseitigen Lage am Rotorblatt 30, vorzugsweise im Bereich oder benachbart ihrer Rotorblattspitzen 34, angebracht sein. Derartige Seilzüge 40 geben den Rotorblättern 30 vorteilhaft zusätzliche Stabilität, Stützung und Festigkeit.

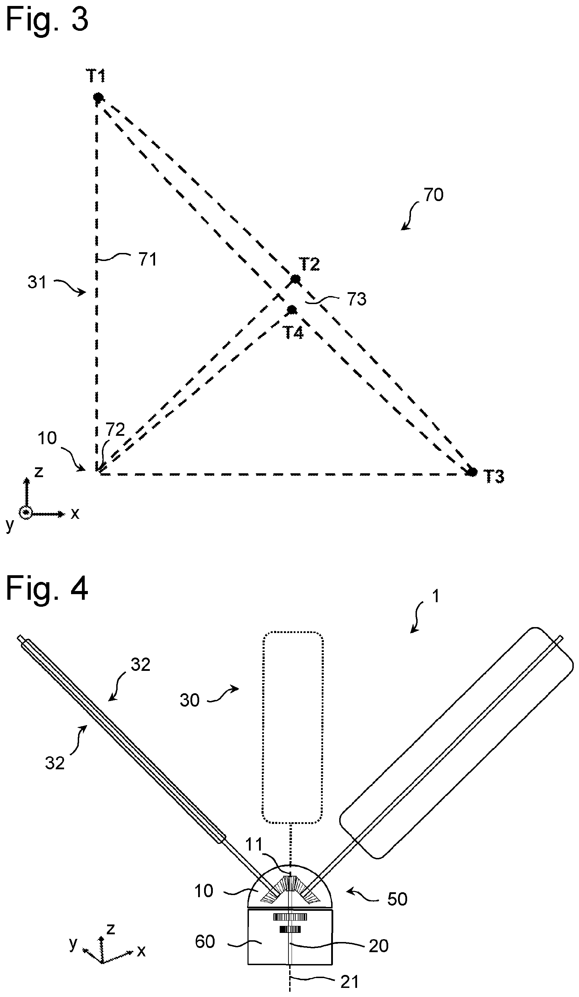

**Fig. 3** zeigt einen sich durch Rotation eines jeden Rotorblattes 30 ergebender Kreiskegel 70 mit vier exemplarisch ausgewählten Durchtrittspunkten T1, T2, T3 und T4. Ein Kegel oder Konus ist bekanntlich ein geometrischer Körper, der entsteht, wenn man alle Punkte eines in einer Ebene liegenden, begrenzten und zusammenhängenden Flächenstücks geradlinig mit einer Spitze 72 außerhalb der Ebene verbindet. Ist das Flächenstück - wie vorliegend - eine Kreisscheibe 73, wird der Körper Kreiskegel 70 genannt. Steht die Spitze 72 - wie vorliegend - senkrecht auf der Kreisscheibe 73, spricht man von einem geraden Kreiskegel 70. Im Fall des erfindungsgemäßen Universalpropellers 1 wird dabei die Spitze 72 durch die Narbe 10 gebildet.

Diese Ausgestaltung eines Universalpropellers 1 hat zum Vorteil, dass beim Durchtritt der Rotorblätter 30 durch die ausgewählten Durchtrittspunkte T1 bis T4 diese (nicht nur aber zumindest theoretisch) die folgenden Widerstands- W und Auftriebswerte A aufweisen:

|  | T1 | T2 | T3 | T4 |
|---|---|---|---|---|
| Widerstandskomponenten (W) | Max. | Mittel | Min. | Mittel |
| Auftriebskomponenten (A) | Min. | Mittel | Max. | Mittel |

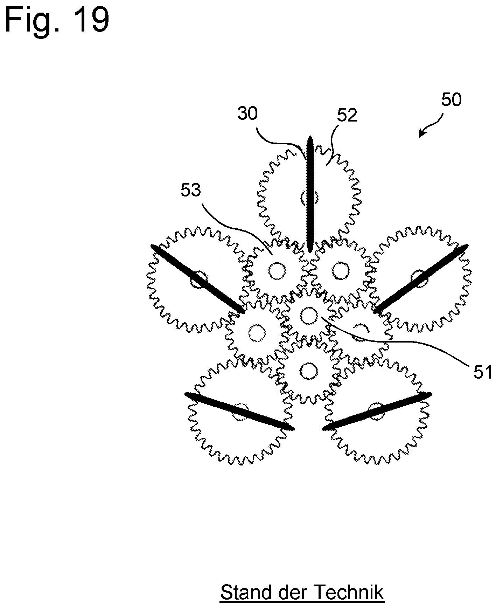

**Fig. 4** zeigt einen Universalpropeller 1 in einer Seitenansicht mit abgerundeten Rotorblattspitzen 34. Dabei hat sich bewährt, wenn ein jedes Rotorblatt 30 wenigstens abschnittsweise zwei im Wesentlichen ebene Oberseiten 32 aufweist. Im Wesentlichen ebene Oberseiten 32 ermöglichen vorteilhaft die Anordnung von Solarzellen für zusätzliche Stromerzeugung aus Solarenergie darauf (nicht dargestellt). Darüber hinaus ist ein (hier nicht funktions- oder maßgetreu dargestelltes) Steuerungsgetriebe 50 vorgesehen, welches eine Drehung der Rotorblätter 30 um ihre Längsachse 31 ermöglicht. Nähere Ausführungen zum erfindungsgemäßen Steuerungsgetriebe 50 anhand von zwei beispielhaften Ausgestaltungen finden sich in der Beschreibung zu den Fig. 19 bis 21.

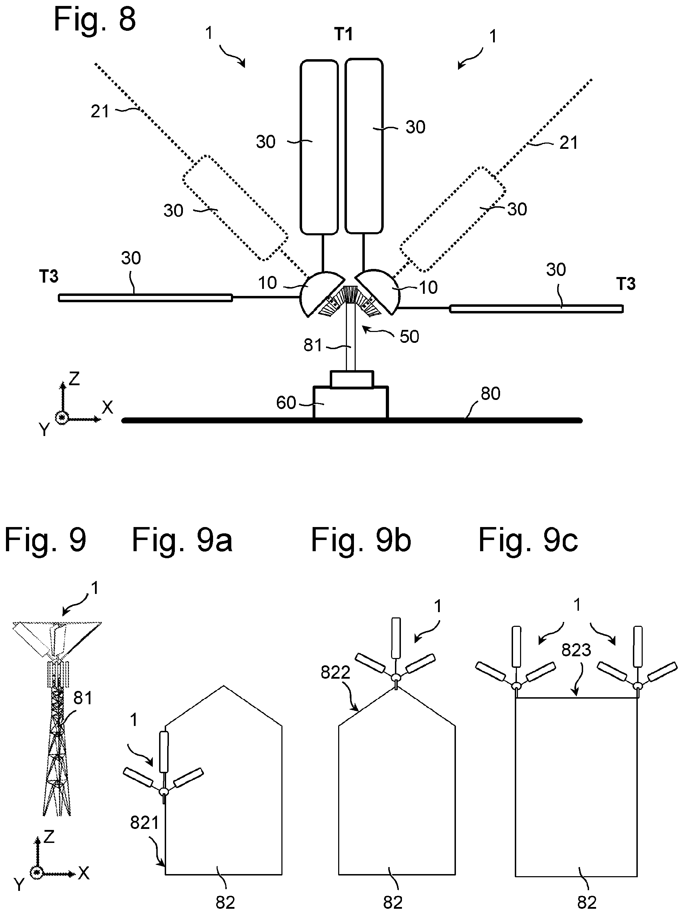

Ein Verfahren zum Betrieb eines Universalpropellers 1 wie zuvor beschrieben zeichnet sich sodann dadurch aus, dass über ein (in Fig. 4 und Fig. 8 nicht funktions- oder maßgetreu dargestelltes) Steuerungsgetriebe 50 eine Drehung der Rotorblätter 30 um ihre Längsachse 31 synchron zur Rotation der Rotorblätter 30 um 360° entlang der Mantelfläche 71 eines Kreiskegels 70 erfolgt.

In einer Ausgestaltung des Verfahrens hat sich bewährt, wenn die Drehgeschwindigkeit der Rotorblätter 30 um ihre Längsachse 31 halb so hoch ist wie die Rotationsgeschwindigkeit der Rotorblätter 30 um 360° entlang der Mantelfläche 71 des Kreiskegels 70. Somit ist die Rotationsgeschwindigkeit der Rotorblätter 30 entlang der Mantelfläche 71 des Kreiskegels 70 synchron zur Rotationsgeschwindigkeit der Nabe 10 bzw. dem gesamten Universalpropeller 1. Demgegenüber drehen die Rotorblätter 30 um ihre Längsachse 31 vorzugsweise entgegen der Rotationsrichtung der Rotorblätter 30 um 360° entlang der Mantelfläche 71 des Kreiskegels 70 (in Fig. 2 ist die Drehrichtung der Rotorblätter 30 und die Rotationsrichtung der Nabe 10 durch entsprechende Pfeile gekennzeichnet). Dies hat zum Vorteil, dass die Rotorblätter 30 beim Rotieren um 360° entlang der Mantelfläche 71 des Kreiskegels 70 stetig zur Ausnutzung maximaler Auftriebs- A beziehungsweise Widerstandskomponenten W ausgerichtet sind.

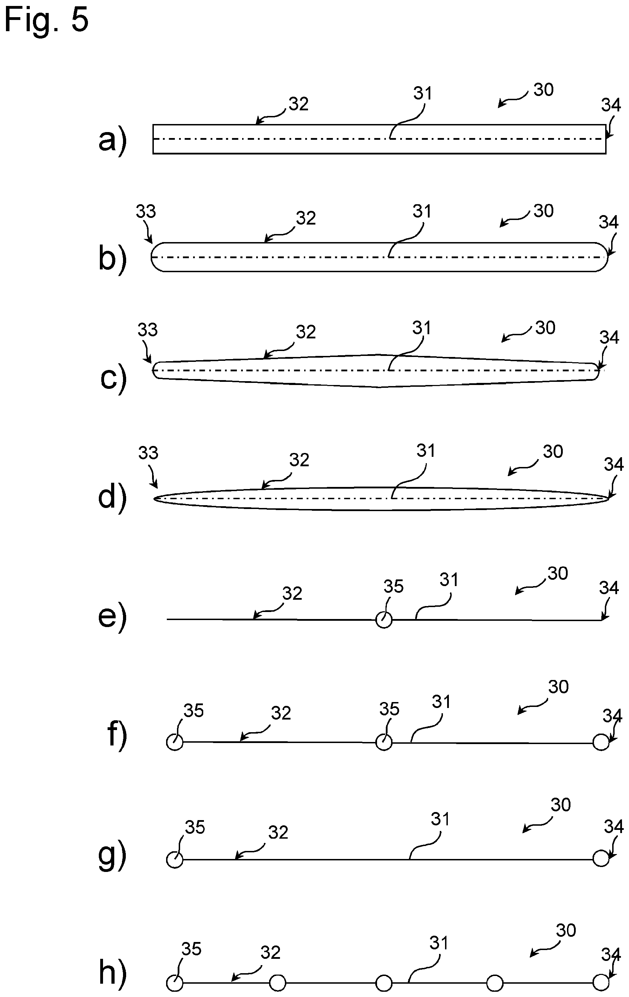

**Fig. 5** zeigt eine Übersicht bevorzugter Rotorblattprofile. Dabei zeigt **Fig. 5a** ein im Wesentlichen rechteckförmiges Rotorblatt 30. Das in **Fig. 5b** dargestellte Rotorblatt unterscheidet sich davon durch gerundet ausgebildete Seitenkanten 33. Demgegenüber zeigt **Fig. 5c** ein im Wesentlichen rautenförmig gestaltetes Rotorblatt 30 mit ebenfalls gerundeten Seitenkanten 33. Schließlich zeigt **Fig. 5d** ein im Wesentlichen oval profiliertes Rotorblatt 30 mit konisch ausgebildeten Seitenkanten 33. Gerundete oder konisch ausgebildete Seitenkanten 33 haben verringerte bzw. minimierte Widerstandsbeiwerte zum Vorteil. Darüber hinaus können auch ultraflache Rotorblätter 30 zur Anwendung kommen. **Fig. 5e bis Fig. 5h** zeigen diverse Ausführungsformen, wobei zur Stabilität mittig und/oder endseitig des Rotorblattes 30 Versteifungen 35 vorgesehen sein können. Die in Fig. 5a bis Fig. 5h dargestellt Rotorblätter 30 können aus bekannten Verbundfaserstoffen gefertigt sein. Alternativ bieten sich, insbesondere bei den in den Fig. 5e bis 5h dargestellten Rotorblättern 30, auch textile Stoffe an, welche durch die Versteifungen 35 aufgespannt werden.

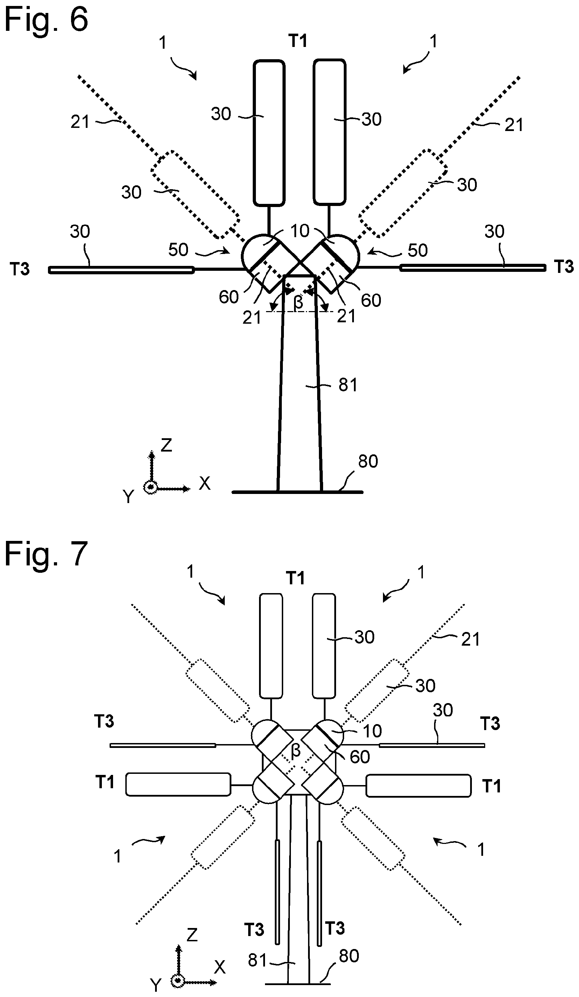

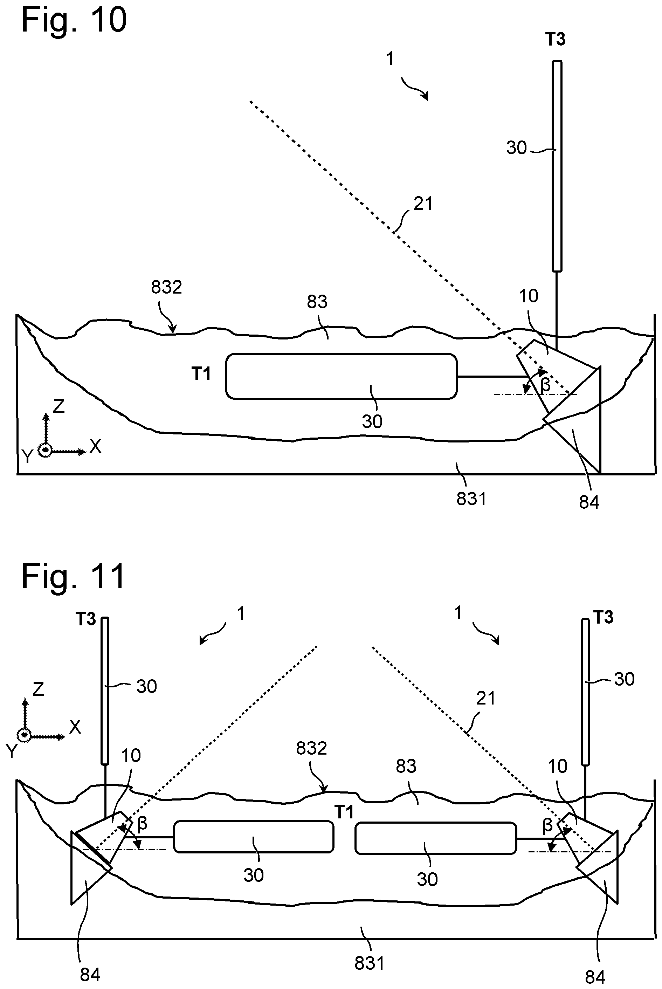

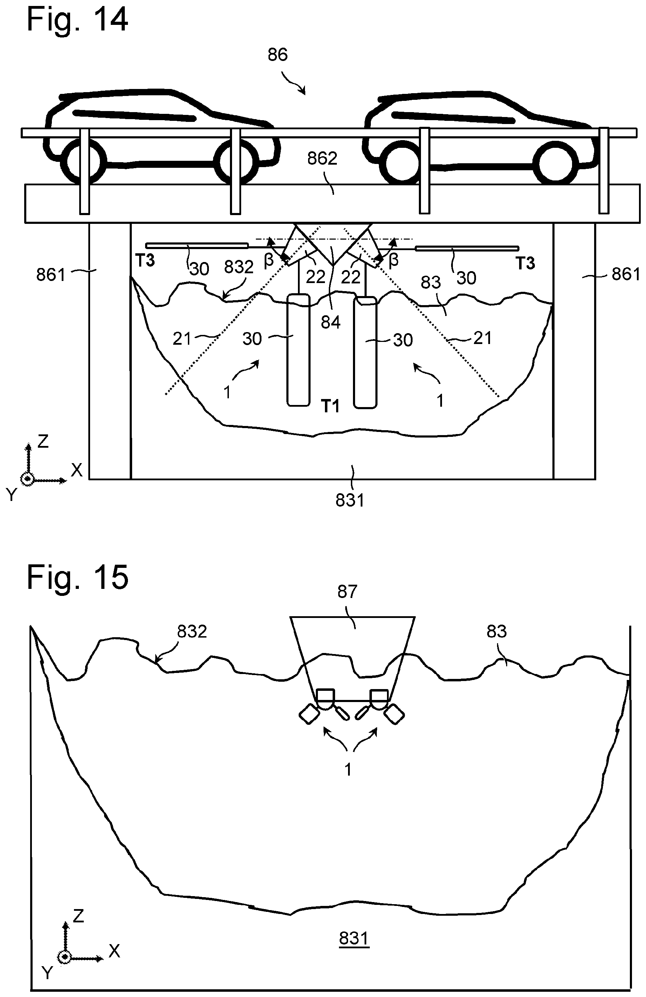

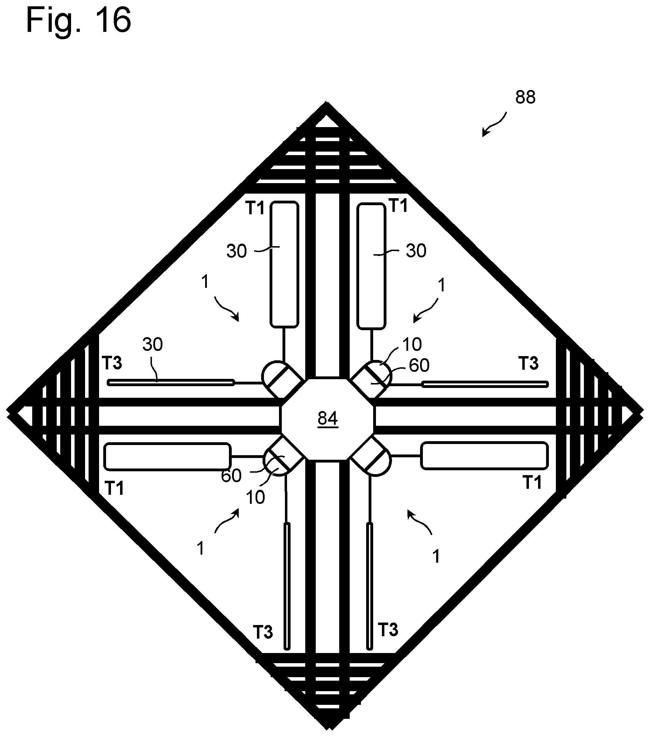

Die vorliegende Erfindung eignet sich insbesondere für favorisierte Verwendungen wie die Verwendung in einer Windkraftanlage (Fig. 6 bis 9), Wasserkraftanlage (Fig. 10 bis 14) oder einer Antriebsmaschine eines Schiffes (Fig. 15) oder eines Flugzeugs (Fig. 16 bis 18). Dabei eignen sich Montagen, bei der die Mittelachse 21 der Welle 20 unter einem Winkel zwischen 0° und 360°, bevorzugt von 45°, zu einer Horizontalen montiert ist.

**Fig. 6** zeigt eine bevorzugte Montage zweier Universalpropeller 1 als Teil einer Tandem-Windkraftanlage. Erkennbar ist, wie auf einem Mast 81, welcher vom Boden 80 entlang einer Vertikalen Z eines auf den Universalpropeller 1 bezogenen Montagekoordinatensystems (X, Y, Z) emporragt, welcher zwei Generatoren 60 zur Stromerzeugung trägt, welche jeweils durch die Nabe 10 eines erfindungsgemäßen Universalpropellers 1 angetrieben werden. Dabei ist die Mittelachse 21 der Welle 20 (nicht dargestellt) unter dem bevorzugten Winkel β = 45° zur Horizontalen X weg vom Mast 81 angeordnet. Zu Zwecken der Synchronisation der Drehung der Rotorblätter 30 um ihre Längsachse 31, der Rotation der Rotorblätter 30 um 360° entlang der Mantelfläche 71 eines Kreiskegels 70 und/oder dem Antrieb des Generators 60 kann bzw. können, beispielsweise in der Nabe 10 selbst (vgl. Fig. 4) oder zwischen dieser 10 und dem Generator 60, ein oder mehrere (in den Fig. 4 und Fig. 8 nicht funktions- oder maßgetreu dargestelltes) Steuerungsgetriebe 50 vorgesehen sein.

**Fig. 7** zeigt eine bevorzugte Montage vierer Universalpropeller 1 als Teil einer Quattro-Windkraftanlage. Ersichtlich sind die Universalpropeller 1 dergestalt sternförmig gruppiert, dass durch Auftriebs- A und Widerstandskomponenten W auf den Mast 81 einwirkende Kräfte weit möglichst ausbalanciert sind. Hinsichtlich weiterer Details verhält es sich wie in Fig. 6 beschrieben.

**Fig. 8** zeigt eine bevorzugte Montage zweier Universalpropeller 1 als Teil einer Tandem-Windkraftanlage, bei welcher über ein (hier nicht funktions- oder maßgetreu dargestelltes) Steuerungsgetriebe 50 ein gemeinsamer Generator 60 antreiben, welcher nicht am Mast 81, sondern am Boden 80 angeordnet ist.

Natürlich kann auch ein einzelner erfindungsgemäßer Universalpropeller 1 auf dem Ende eines Mastes 81, insbesondere auf dem Ende eines Mobilfunkmastes, angeordnet sein **(Fig. 9).** Dabei ist die Mittelachse 21 der Welle 20 (nicht dargestellt) unter einem bevorzugten Winkel β = 90° zur Horizontalen X am Ende des Mastes 81 angeordnet.

Fig. 9a bis 9c zeigen weitere bevorzugte Montagen einzelner Universalpropeller 1 an oder auf verschiedenen Gebäuden 82.

Wie in **Fig. 9a** ersichtlich kann ein erfindungsgemäßer Universalpropeller 1 Teil einer seitlich an der Fassade 821 eines Gebäudes 82 angeordnet sein. Dabei ist die Mittelachse 21 der Welle 20 (nicht dargestellt) unter einem bevorzugten Winkel β = 45° zur Horizontalen X weg an der Fassade 821 des Gebäudes 82 angeordnet.

Alternativ oder kumulativ kann ein erfindungsgemäßer Universalpropeller 1 auch Teil einer auf einem Spitzdach 822 **(Fig. 9b)** oder Flachdach 823 **(Fig. 9c)** eines Gebäudes 82 angeordneten Windkraftanlage sein. Dabei ist die Mittelachse 21 der Welle 20 (nicht dargestellt) unter einem bevorzugten Winkel β zwischen 45° bis 90° zur Horizontalen X auf dem Dach 822 bzw. 823 des Gebäudes 82 angeordnet.

**Fig. 10** zeigt eine bevorzugte Montage eines Universalpropellers 1 als Teil einer Wasserkraftanlage. Erkennbar ist, wie auf einer im Gewässerbett 831 eines Gewässers 83 verankerten Lagerstelle 84 ein erfindungsgemäßer Universalpropeller 1 angeordnet sein kann. Die Anordnung kann bevorzugt so ausgelegt sein, dass im Fall des dargestellten Durchtrittspunkt T1, das Rotorblatt 30 mit der höchsten Widerstandkomponente W bezüglich der Wasserströmung ganz in das Gewässer 83 eintaucht, während die verbleibenden Rotorblätter 30 zumindest teilweise oder vorzugsweise ganz außerhalb des Wasserspiegels 832 rotieren. Bei dem Gewässer 83 kann es sich um einen Fluss, einer Meerenge oder einem anderen strömenden Gewässer, beispielsweise der Durchlass eines Staudamms, oder das Fallrohr einer Wasserkraftwerkseinrichtung, handeln.

**Fig. 11** zeigt eine bevorzugte Montage zweier Universalpropeller 1 als Teil einer Tandem-Wasserkraftanlage mit einer für jeden Universalpropeller 1 gesonderten Lagerstelle 84. Hinsichtlich weiterer Details verhält es sich wie in Fig. 10 beschrieben.

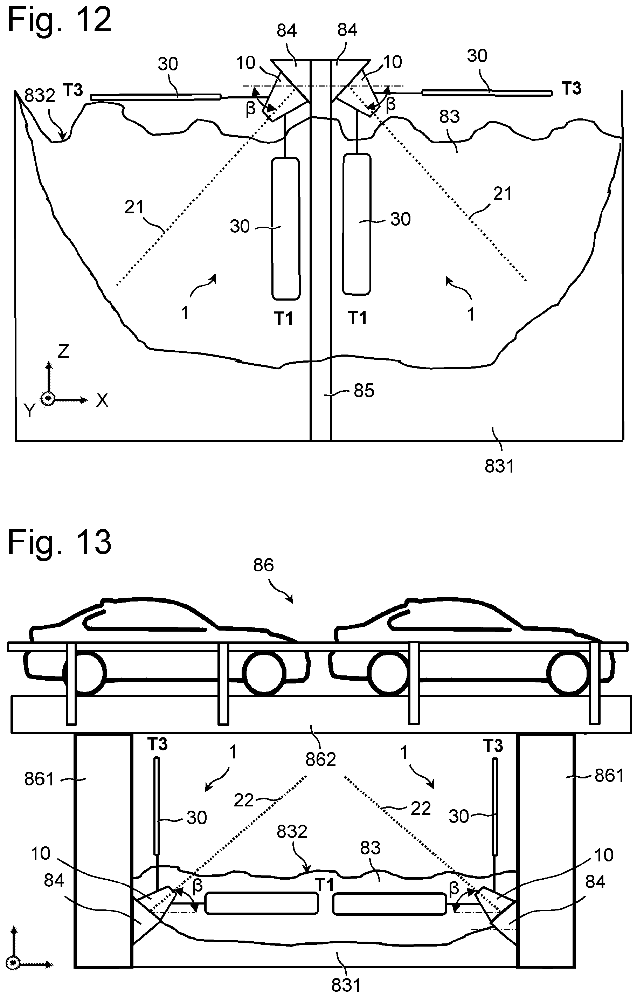

**Fig. 12** zeigt eine bevorzugte Montage zweier Universalpropeller 1 als Teil einer Tandem-Wasserkraftanlage mit einem gemeinsamen, im Gewässerbett 831 verankertem, LagerMast 85. Hinsichtlich weiterer Details verhält es sich wiederum wie in Fig. 10 beschrieben.

**Fig. 13** zeigt, wie die Tandem-Wasserkraftanlage aus Fig. 11 bevorzugt unter einer Brücke 86 angeordnet und die Lagerstellen 84 Teil der Brückenfeiler 861 sein können. Hinsichtlich weiterer Details verhält es sich erneut wie in Fig. 10 beschrieben.

**Fig. 14** zeigt eine alternative Tandem-Wasserkraftanlage mit einer unterhalb dem Brückenelement 862 angeordneten Lagerstelle 84. Hinsichtlich weiterer Details verhält es sich wie in Fig. 10 beschrieben.

**Fig. 15** zeigt die bevorzugte Verwendung zweier Universalpropeller 1 als Antriebsmaschine eines Schiffes 87. Anders als bei Anwendungen zur Stromerzeugung wird die Welle 20 eines jeden Universalpropellers 1 nunmehr von einem Motor 90 (hier nicht dargestellt) oder vergleichbaren Antrieb angetrieben. Es versteht sich, dass die Universalpropeller 1 dergestalt durch den Antrieb in Rotation versetzt werden, dass bei Geradeausfahrt alle durch die Universalpropeller 1 auf das Schiff 87 einwirkenden Kräfte ausbalanciert sind.

**Fig. 16** zeigt die bevorzugte Verwendung von vier Universalpropeller 1 als Teil eines Energiedrachens 88. Wie beim Ausführungsbeispiel nach Fig. 7 sind auch hier die Universalpropeller 1 dergestalt sternförmig gruppiert, dass durch Auftriebs- A und Widerstandskomponenten W auf den Energiedrachen 88 einwirkende Kräfte weit möglichst ausbalanciert sind. Erkennbar ist, wie die Nabe 10 eines jeden Universalpropellers 1 je einen Generator 60 antreibt, welche sternförmig um eine mittige Lagerstelle 84 so gruppiert sind, dass die Kräfte der Universalpropeller 1 ausbalanciert sind. Im Übrigen sei analog auf die vorstehenden Ausführungen verwiesen.

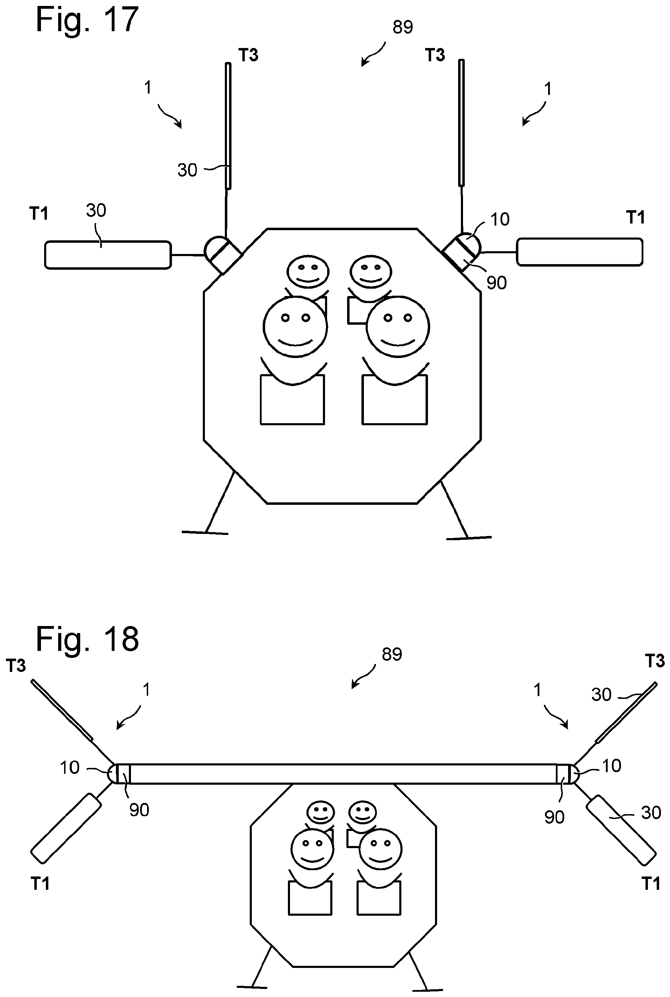

**Fig. 17** und **18** zeigen die bevorzugte Verwendung zweier Universalpropeller 1 als Antriebsmaschine eines Flugzeugs 89 (Transportdrohne). Anders als bei Anwendungen zur Stromerzeugung wird die Welle 20 eines jeden Universalpropellers 1 nunmehr von einem Motor 90 oder vergleichbaren Antrieb angetrieben. Es versteht sich, dass die Universalpropeller 1 dergestalt durch den Antrieb in Rotation versetzt werden, dass bei Geradeausflug alle durch die Universalpropeller 1 auf das Flugzeug 89 einwirkenden Kräfte ausbalanciert sind. Dabei sind bei einem in Fig. 17 dargestellten Flugzeugt 89 vorteilhaft keine extra Flügel vorzusehen. Vielmehr können die Universalpropeller 1 unmittelbar an dem Außengehäuse des Fluggeräts angeordnet werden, was ein extrem wendiges Flugzeug 89 zum Vorteil hat. Optional können - wie bei dem in Fig. 18 gezeigten Fluggerät 89 - kurze Stummelflügel für die Anbindung der Universalpropeller 1 an das Außengehäuse des Flugzeugs 89 vorgesehen sein, was vorteilhaft die Flugstabilität des Flugzeugs 89 erhöht.

In den folgenden Fig. 19 - 21 wird die Funktionsweise des erfindungsgemäßen Universalpropellers 1, insbesondere das Zusammenspiel von Steuerungsgetriebe 50 und Nabengetriebe 12, anhand verschiedener Ausgestaltungen und Beispielkonfigurationen illustriert.

**Fig. 19** zeigt dazu ein Beispiel eines Steuerungsgetriebes 50 aus dem Stand der Technik.

Das hier dargestellte Beispiel zeigt ein Steuerungsgetriebe 50 zur Steuerung von fünf Rotorblättern 30. Dazu müssen neben dem Referenzzahnrad 51 und den fünf Zahnrädern 52 der Rotorblätter 30 fünf weitere, zwischen Referenzzahnrad 51 und den Zahnrädern 52 positionierte, Richtungsräder 53 vorgesehen werden, welche insbesondere der Kraftübertragung und der Anpassung der Drehrichtung der Zahnräder 52 der Rotorblätter 30 dienen. Zwischen dem Referenzzahnrad 51 und den Zahnrädern 52 der Rotorblätter 30 besteht zudem eine zwingend einzuhaltende Größenbeziehung von $S_{rot} / S_r = 2 // 1$ mit $S_{rot}$ = Größe der Zahnräder 52 der Rotorblätter 30 und $S_r$ = Größe des Referenzzahnrads 51, damit eine synchrone Rotation der Rotorblätter 30 um ihre Längsachse 31 zur Rotation der Rotorblätter 30 um 360° entlang der Mantelfläche 71 eines Kreiskegels 70 gewährleistet ist. Die genannten konstruktionstechnischen Anforderungen führen beim Stand der Technik nachteilig zu einer vergleichsweise großen Bauform einer, ein derartiges Steuerungsgetriebe 50 umfassenden, Nabe 10. Die Anordnung von mehreren großen Zahnrädern 51, 52, 53 in einer vergleichsweise kleinen Nabe 10 ist zudem wirtschaftlich oft nicht machbar und technisch anspruchsvoll und in einigen Konfigurationen technisch auch gar nicht möglich.

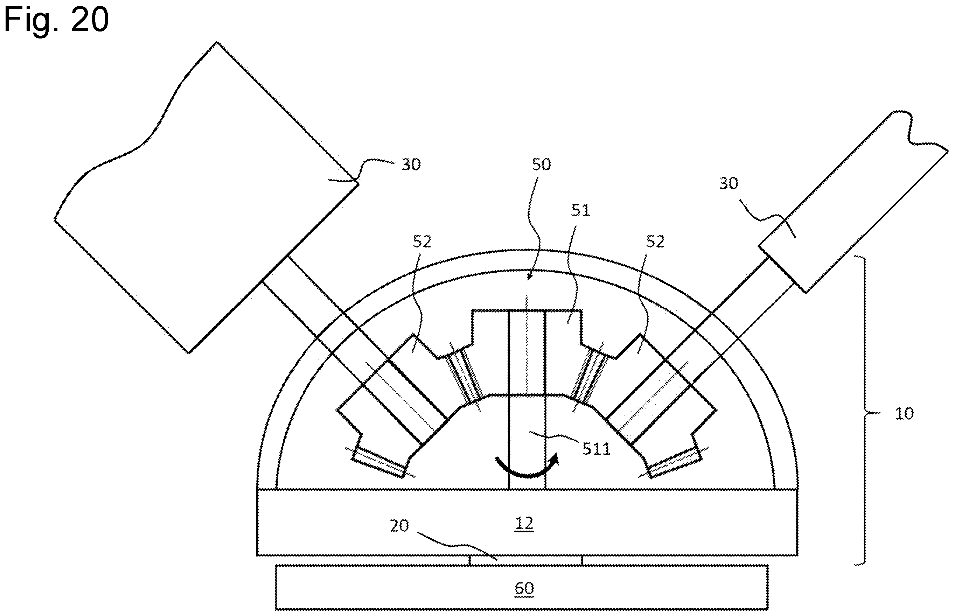

Im Gegensatz dazu zeigt nun **Fig. 20** in einer Schnittdarstellung eine Ausgestaltung des Propellers 1 mit einem Steuerungsgetriebe 50 in der sog. "Innenkonfiguration".

Wie zu sehen ist, umfasst die Nabe 10 ein Steuerungsgetriebe 50 mittels dessen eine Drehung der Rotorblätter 30 um ihre Längsachse 31 ermöglicht ist. An jedem Rotorblatt 30 ist ein Zahnrad 52 angeordnet, welches mit einem Referenzzahnrad 51 des Steuerungsgetriebes 50 in unmittelbarer Wirkverbindung steht. Im Gegensatz zum Stand der Technik ist hier vorteilhaft kein Richtungsrad 53 notwendig. Das Steuerungsgetriebe 50 ist mit einem Nabengetriebe 12 wirkverbunden, wobei das Nabengetriebe 12 eingerichtet ist, eine Winkelgeschwindigkeit $\omega_n$ einer Rotationsbewegung der Nabe 10 aufzunehmen und zu verarbeiten. Die Wirkverbindung zwischen Steuerungsgetriebe 50 und Nabengetriebe 12 kann auf verschiedene Weise realisiert werden, im vorliegenden Beispiel ist das Referenzzahnrad 51 des Steuerungsgetriebes 50 über ein Verbindungselement 511 mit dem Nabengetriebe 12, insbesondere mit einem der Zahnräder des Nabengetriebes 12, wirkverbunden. Das Nabengetriebe 12 kann vorzugsweise als ein Planetengetriebe oder als ein einfaches Zahnradgetriebe ausgestaltet sein.

In der hier dargestellten "Innenkonfiguration" des Steuerungsgetriebes 50 ist das Referenzzahnrad 51 zentral im Steuerungsgetriebe 50 angeordnet und von den Zahnrädern 52 der Rotorblätter 30 umgeben.

Im Fall der hier dargestellten "Innenkonfiguration" des Steuerungsgetriebes 50 sind das Referenzzahnrad 51 und die Zahnräder 52 der Rotorblätter 30 so ausgelegt, dass sich das Verhältnis einer Winkelgeschwindigkeit $\omega_r$ des Referenzzahnrads 51 zur Winkelgeschwindigkeit $\omega_n$ der Rotationsbewegung der Nabe 10 verhält wie:

$$\omega_r / \omega_n = 1 + (1/2) * (S_{rot} / S_r)$$

mit $S_{rot}$ = Größe der Zahnräder 52 der Rotorblätter 30 und $S_r$ = Größe des Referenzzahnrads 51.

In der folgenden Tabelle sind exemplarisch verschiedene Zahnradgrößenkombinationen, die anhand der in Additionsschreibweise obengenannten Formel berechneten Winkelgeschwindigkeit $\omega_r$ des Referenzzahnrads 51, sowie die maximal mögliche Anzahl an Rotorblättern 30, die bei der jeweiligen Kombination an der Nabe 10 angeordnet werden können, aufgeführt. Die Winkelgeschwindigkeit $\omega_n$ der Rotationsbewegung der Nabe 10 ist dabei auf den Wert 1 gesetzt (Der Wert von $\omega_r$ gibt demnach die Relativgeschwindigkeit zu $\omega_n$ wieder.).

| $S_{rot}$ | $S_r$ | $\omega_r$ | Maximal mögliche Anzahl an Rotorblättern 30 |
|---|---|---|---|
| 2 | 1 | 2 | 3-4 |
| 3 | 2 | 1.75 | 3-4 |
| 1 | 1 | 1.5 | 4-5 |
| 2 | 3 | 1.3333 | 6-8 |
| 1 | 2 | 1.25 | 8-10 |
| 1 | 3 | 1.1666 | 10-16 |
| 1 | 4 | 1.125 | 16-20 |
| 2 | 5 | 1.2 | 18-22 |
| 1 | 5 | 1.1 | 20-25 |

Aus der Tabelle ergibt sich beispielsweise bei einem Größenverhältnis $S_{rot} / S_r$ von 1 : 1 eine Winkelgeschwindigkeit $\omega_r$ des Referenzzahnrads 51 von 1,5 relativ zur Winkelgeschwindigkeit $\omega_n$ der Rotationsbewegung der Nabe 10, was durch die Wahl eines entsprechend ausgelegten Nabengetriebes 12 technisch berücksichtigt werden kann. Bei dieser genannten Auslegung des Steuerungsgetriebes 50 in der "Innenkonfiguration" und des Nabengetriebes 12 und deren Zusammenspiel, berechenbar über die in Additionsschreibweise obengenannten Formel, könnten dann beispielsweise maximal 4 bis 5 Rotorblätter 30 an der Nabe 10 angeordnet werden.

Die obige Tabelle gibt hierbei nur einen Auszug aus den theoretisch möglichen Kombinationen wieder, sodass vorteilhaft je nach Anwendungsfall die Auslegung des Steuerungsgetriebes 50 frei gewählt werden kann.

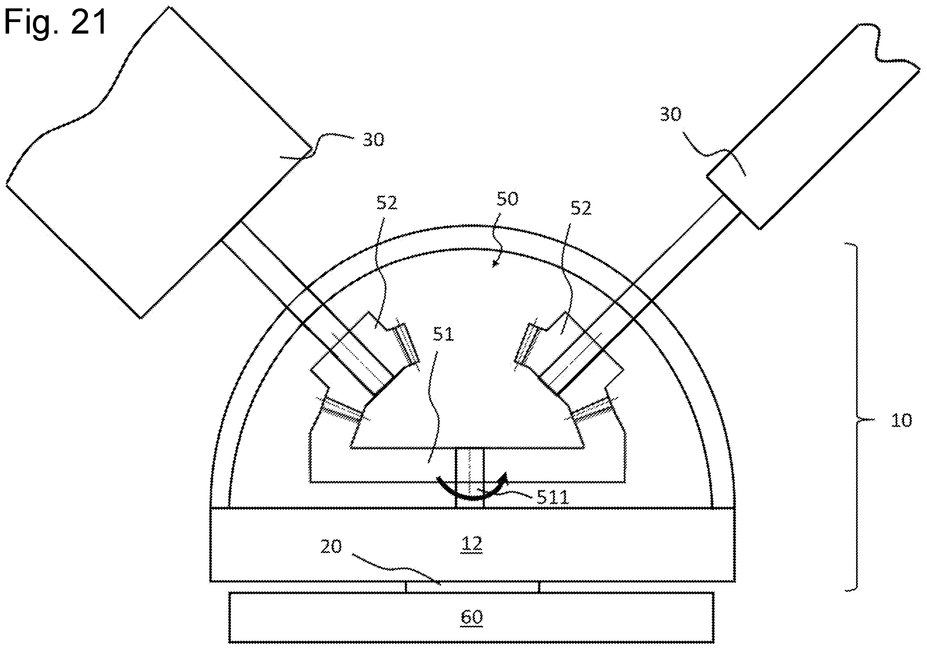

**Fig. 21** zeigt schließlich in einer Schnittdarstellung eine Ausgestaltung eines Propellers 1 mit einem Steuerungsgetriebe 50 in der "Außenkonfiguration".

Der Unterschied zur in Fig. 20 dargestellten "Innenkonfiguration" besteht hier darin, dass das Referenzzahnrad 51, [PA3] vorzugsweise ausgebildet als ein Umlaufrad, ein Tellerrad oder ein Kronenrad, außerhalb des Zentrums des Steuerungsgetriebes 50 angeordnet ist und seinerseits die Zahnräder 52 der Rotorblätter 30 umgibt. Bezüglich des Aufbaus gilt ansonsten das zur Fig. 20 Beschriebene entsprechend auch für diese Ausgestaltung. Das Referenzzahnrad 51 und die Zahnräder 52 der Rotorblätter 30 sind dabei so ausgelegt, dass sich das Verhältnis einer Winkelgeschwindigkeit $\omega_r$ des Referenzzahnrads 51 zur Winkelgeschwindigkeit $\omega_n$ der Rotationsbewegung der Nabe 10 verhält wie:

$$\omega_r / \omega_n = 1 - (1/2) * (S_{rot} / S_r)$$

mit $S_{rot}$ = Größe der Zahnräder 52 der Rotorblätter 30 und $S_r$ = Größe des Referenzzahnrads 51.

In der folgenden Tabelle sind exemplarisch verschiedene Zahnradgrößenkombinationen, die anhand der zuvor angegebenen Variante der erfindungsgemäßen Formel berechneten Winkelgeschwindigkeit $\omega_r$ des Referenzzahnrads 51, sowie die maximal mögliche Anzahl an Rotorblättern 30, die bei der jeweiligen Kombination an der Nabe 10 angeordnet werden können, aufgeführt. Die Winkelgeschwindigkeit $\omega_n$ der Rotationsbewegung der Nabe 10 ist dabei auf den Wert 1 gesetzt (Der Wert von $\omega_r$ gibt demnach die Relativgeschwindigkeit zu $\omega_n$ wieder.).

| $S_{rot}$ | $S_r$ | $\omega_r$ | Maximal mögliche Anzahl an Rotorblättern 30 |
|---|---|---|---|
| 1 | 12 | 0.9853 | 12-16 |
| 1 | 10 | 0.95 | 10-12 |
| 1 | 8 | 0.9375 | 8-10 |
| 1 | 6 | 0.9166 | 6-8 |
| 1 | 5 | 0.9 | 5-7 |
| 1 | 4 | 0.875 | 4-6 |
| 1 | 3 | 0.8333 | 3-4 |
| 2 | 5 | 0.8 | 2-3 |
| 1 | 2 | 0.75 | 1-2 |
| 2 | 1 | 0.00 | 0 |

Aus der Tabelle ergibt sich beispielsweise bei einem Größenverhältnis $S_{rot} / S_r$ von 1 : 4 eine Winkelgeschwindigkeit $\omega_r$ des Referenzzahnrads 51 von 0,875 relativ zur Winkelgeschwindigkeit $\omega_n$ der Rotationsbewegung der Nabe 10, was durch die Wahl eines entsprechend ausgelegten Nabengetriebes 12 technisch berücksichtigt werden kann. Bei dieser genannten Auslegung des Steuerungsgetriebes 50 in der "Außenkonfiguration" und des Nabengetriebes 12 und deren Zusammenspiel, berechenbar über die in Subtraktionsschreibweise obengenannten Formel, könnten dann beispielsweise maximal 4 bis 6 Rotorblätter 30 an der Nabe 10 angeordnet werden.

Die in der letzten Zeile der obigen Tabelle aufgeführte Kombination eines im Vergleich zur Größe $S_r$ des Referenzzahnrades 51 doppelt so großen Zahnrads 52 eines Rotorblattes 30 wäre bei einem Steuerungsgetriebe 50 des Standes der Technik (vgl. Fig. 19) physikalisch (technisch) gar nicht machbar und ließe sich höchstens mit einem Kettenantrieb oder mit einem Zahnriemenantrieb realisieren.

Die obige Tabelle gibt hierbei wiederum nur einen Auszug aus den theoretisch möglichen Kombinationen wieder, sodass vorteilhaft je nach Anwendungsfall die Auslegung des Steuerungsgetriebes 50 auch bei der "Außenkonfiguration" frei gewählt werden kann.

Die vorliegende Erfindung betrifft einen neuartigen Universalpropeller 1 welcher sich gegenüber gattungsbildenden Propellern 1 dadurch auszeichnet, dass an jedem Rotorblatt 30 ein Zahnrad 52 angeordnet ist, welches mit einem Referenzzahnrad 51 des Steuerungsgetriebes 50 in unmittelbarer Wirkverbindung steht, dass das Steuerungsgetriebe 50 mit einem Nabengetriebe 12 wirkverbunden ist, wobei das Nabengetriebe 12 eingerichtet ist, eine Winkelgeschwindigkeit $\omega_n$ einer Rotationsbewegung der Nabe 10 aufzunehmen und zu verarbeiten, wobei das Referenzzahnrad 51 zentral im Steuerungsgetriebe 50 angeordnet ist und die Zahnräder 52 der Rotorblätter 30 so ausgelegt sind, dass sich das Verhältnis einer Winkelgeschwindigkeit $\omega_r$ des Referenzzahnrads (51) zur Winkelgeschwindigkeit $\omega_n$ der Rotationsbewegung der Nabe 10 verhält wie: $\omega_r / \omega_n = 1 + (1/2) * (S_{rot} / S_r)$ mit $S_{rot}$ = Größe der Zahnräder 52 der Rotorblätter 30 und $S_r$ = Größe des Referenzzahnrads 51, oder das Referenzzahnrad 51 außerhalb des Steuerungsgetriebes 50 angeordnet ist und seinerseits die Zahnräder 52 der Rotorblätter 30 umgibt, wobei sich das Verhältnis einer Winkelgeschwindigkeit $\omega_r$ des Referenzzahrads 51 zur Winkelgeschwindigkeit $\omega_n$ der Rotationsbewegung der Nabe 10 verhält wie: $\omega_r / \omega_n = 1 - (1/2) * (S_{rot} / S_r)$ mit $S_{rot}$ = Größe der Zahnräder 52 der Rotorblätter 30 und $S_r$ = Größe des Referenzzahrads 51.

Die vorliegende Erfindung eignet sich insbesondere für die Verwendung in einer Windkraftanlage, Wasserkraftanlage oder Antriebsmaschine eines Schiffes oder Flugzeugs.

**Bezugszeichenliste**

1     Universalpropeller

10    Nabe
11    Mittelachse der Nabe 10
12    Nabengetriebe ("hub gear")

20    Welle
21    Mittelachse der Welle 20

30    Rotorblatt
31    Längsachse des Rotorblattes 30
32    Oberseiten des Rotorblattes 30
33    Seitenkanten des Rotorblattes 30
34    Rotorblattspitze
35    Versteifung

40    Seilzug

50    Steuerungsgetriebe ("timing gear")
51    Referenzzahnrad
511   Verbindungselement
52    Zahnrad eines Rotorblattes (30)
53    Richtungsrad (nur im Stand der Technik)

60    Generator
70    Kreiskegel
71    Mantelfläche des Kreiskegels 70
72    Spitze des Kreiskegels 70
73    Kreisscheibe des Kreiskegels 70

80    Boden
81    Mast
82    Gebäude
821   Fassade
822   Spitzdach
823   Flachdach
83    Gewässer
831   Gewässerbett
832   Wasserspiegel
84    Lagerstelle
85    Lagermast
86    Brücke
861   Brückenfeiler
862   Brückenelement
87    Schiff
88    Energiedrache
89    Flugzeug

90      Motor

A       Auftriebskomponente
W       Widerstandskomponente

T1, T2, T3, T4      Durchtrittspunkte

$\alpha$       Winkel zwischen Längsachse 31 und Mittelachse 21 im Raumkoordinatensystem des Universalpropellers 1
$\beta$       Winkel zwischen Mittelachse 21 der Welle 20 und einer Horizontalen X im Montagekoordinatensystem des Universalpropellers 1
x, y, z     Raumkoordinatensystem des Universalpropellers 1
x       erste Richtung einer horizontalen Ebene
y       zweite Richtung einer horizontalen oder vertikalen Ebene
z       erste Richtung einer vertikalen Ebene

X, Y, Z     Montagekoordinatensystem des Universalpropellers 1
X       Horizontale
Y       Horizontale (senkrecht zu X)
Z       Vertikale

**Patentansprüche**

1.   Universalpropeller (1) mit einer Nabe (10), welche auf einer Welle (20) drehbar gelagert ist, wobei an der Nabe (10)

- zwei Rotorblätter (30) zueinander gegenüberliegend
oder
- wenigstens drei Rotorblätter (30) zueinander sternförmig angeordnet sind,
- wobei ein jedes Rotorblatt (30) am Ende seiner Längsachse (31) dergestalt unter einem Winkel $\alpha$ zur Mittelachse (21) der Welle (20) an der Nabe (10) angeordnet ist, dass die Längsachse (31) eines jeden Rotorblatts (30) bei Rotation um 360° die Mantelfläche (71) eines geraden Kreiskegels (70) beschreibt,
- wobei die Nabe (10) ein Steuerungsgetriebe (50) umfasst, mittels dessen eine Drehung der Rotorblätter (30) um ihre Längsachse (31) ermöglicht ist;
- wobei an jedem Rotorblatt (30) ein Zahnrad (52) angeordnet ist, welches mit einem Referenzzahnrad (51) des Steuerungsgetriebes (50) in unmittelbarer Wirkverbindung steht;
- und wobei das Steuerungsgetriebe (50) mit einem Nabengetriebe (12) wirkverbunden ist, wobei das Nabengetriebe (12) eingerichtet ist, eine Winkelgeschwindigkeit $\omega_n$ einer Rotationsbewegung der Nabe (10) aufzunehmen und zu verarbeiten;
**dadurch gekennzeichnet,**
- **dass** das Referenzzahnrad (51) zentral im Steuerungsgetriebe (50) angeordnet und von den Zahnrädern (52) der Rotorblätter (30) umgeben ist und das Referenzzahnrad (51) und die Zahnräder (52) der Rotorblätter (30) des Steuerungsgetriebes (50) so ausgelegt sind, dass sich das Verhältnis einer Winkelgeschwindigkeit $\omega_r$ des Referenzzahnrads (51) zur Winkelgeschwindigkeit $\omega_n$ der Rotationsbewegung der Nabe (10) verhält wie: $\omega_r / \omega_n$ = 1 + (1/2) * ($S_{rot}$ / $S_r$) mit $S_{rot}$ = Größe der Zahnräder (52) der Rotorblätter (30) und $S_r$ = Größe des Referenzzahnrads (51);
oder
- **dass** das Referenzzahnrad (51) außerhalb des Zentrums des Steuerungsgetriebes (50) angeordnet ist und seinerseits die Zahnräder (52) der Rotorblätter (30) umgibt und das Referenzzahnrad (51) und die Zahnräder (52) der Rotorblätter (30) des Steuerungsgetriebes (50) so ausgelegt sind, dass sich das Verhältnis einer Winkelgeschwindigkeit $\omega_r$ des Referenzzahnrads (51) zur Winkelgeschwindigkeit $\omega_n$ der Rotationsbewegung der Nabe (10) verhält wie: $\omega_r / \omega_n$ = 1 - (1/2) * ($S_{rot}$ / $S_r$) mit $S_{rot}$ = Größe der Zahnräder (52) der Rotorblätter (30) und $S_r$ = Größe des Referenzzahnrads (51).

2.   Universalpropeller (1) nach Anspruch 1, **dadurch gekennzeichnet,**

- **dass** das Referenzzahnrad (51), welches außerhalb des Zentrums des Steuerungsgetriebes (50) angeordnet ist und seinerseits die Zahnräder (52) der Rotorblätter (30) umgibt, als ein Umlaufrad, ein Tellerrad oder ein Kronenrad ausgebildet ist.

3.  Universalpropeller (1) nach einem der Ansprüche 1 oder 2, **dadurch gekennzeichnet, dass** die Längsachse (31) eines jeden Rotorblattes (30) zur Mittelachse (21) der Welle (20) in einem Winkel α,

    - zwischen 30° und 60°,
    - oder zwischen 35° und 55°,
    - oder zwischen 40° und 50°,
    - oder von 45°,

    angeordnet sind.

4.  Universalpropeller (1) nach einem der Ansprüche 1 bis 3, **dadurch gekennzeichnet, dass** ein jedes Rotorblatt (30) beim Drehen der Nabe (10) um die Welle (20) in einem ersten Durchtrittspunkt (T1) zu einer senkrechten Ebene (x, z) eines auf den Universalpropeller (1) bezogenen Raumkoordinatensystems (x, y, z) ausgerichtet ist.

5.  Universalpropeller (1) nach Anspruch 4, **dadurch gekennzeichnet, dass** im ersten Durchtrittspunkt (T1) die Längsachse (31) eines jeden Rotorblatts (30) eine Vertikal-Abweichung von bis zu +/- 15° innerhalb der senkrechten Ebene (x, z) aufweisen kann.

6.  Universalpropeller (1) nach einem der vorherigen Ansprüche, **dadurch gekennzeichnet, dass** ein jedes Rotorblatt (30) beim Drehen der Nabe (10) um die Welle (20) in einem dritten Durchtrittspunkt (T3) zu einer horizontalen Ebene (x, y) eines auf den Universalpropeller (1) bezogenen Raumkoordinatensystems (x, y, z) ausgerichtet ist.

7.  Universalpropeller (1) nach Anspruch 6, **dadurch gekennzeichnet, dass** im dritten Durchtrittspunkt (T3) die Längsachse (31) eines jeden Rotorblatts (30) eine Horizontal-Abweichung von bis zu +/- 15° außerhalb der horizontalen Ebene (x, y) aufweisen kann.

8.  Universalpropeller (1) nach einem der vorherigen Ansprüche, **dadurch gekennzeichnet, dass** ein jedes Rotorblatt (30) wenigstens abschnittsweise zwei im Wesentlichen ebene Oberseiten (32) aufweist, wobei vorzugsweise auf den ebenen Oberseiten (32) eines jeden Rotorblattes (30) Solarzellen angeordnet sind.

9.  Universalpropeller (1) nach einem oder mehreren der vorherigen Ansprüche, **dadurch gekennzeichnet, dass** die Seitenkanten (33) eines jeden Rotorblattes (30) gerundet oder konisch ausgebildet sind.

10. Universalpropeller (1) nach einem oder mehreren der vorherigen Ansprüche, **dadurch gekennzeichnet, dass** nebeneinander- und/oder gegenüber-liegende Rotorblätter (30) über Seilzüge (40) miteinander verbunden sind, welche vorzugsweise zwischen einer mittigen und einer endseitigen Lage am Rotorblatt (30), bevorzugt im Bereich oder benachbart ihrer Rotorblattspitzen (34), angebracht sind.

11. Universalpropeller (1) nach einem oder mehreren der vorherigen Ansprüche, **dadurch gekennzeichnet, dass** die Mittelachse (21) der Welle (20) unter einem Winkel zwischen 0° und 360°, bevorzugt von 45°, zu einer Horizontalen (X) eines auf den Universalpropeller (1) bezogenen Montagekoordinatensystems (X, Y, Z) montiert ist.

12. Universalpropeller (1) nach einem oder mehreren der vorherigen Ansprüche, **dadurch gekennzeichnet, dass** das Nabengetriebe (12) als ein Planetengetriebe oder als ein einfaches Zahnradgetriebe ausgestaltet ist.

13. Verfahren zum Betrieb eines Universalpropellers (1) nach einem oder mehreren der vorherigen Ansprüche, bei dem über ein Steuerungsgetriebe (50) eine Drehung der Rotorblätter (30) um ihre Längsachse (31) synchron zur Rotation der Rotorblätter (30) um 360° entlang der Mantelfläche (71) eines Kreiskegels (70) erfolgt.

14. Verfahren nach Anspruch 13, bei dem die Drehgeschwindigkeit der Rotorblätter (30) um ihre Längsachse (31) halb so hoch ist wie die Rotationsgeschwindigkeit der Rotorblätter (30) um 360° entlang der Mantelfläche (71) des Kreiskegels (70).

15. Verwendung eines Universalpropellers (1) nach einem der mehreren der vorherigen Ansprüche in einer Windkraftanlage, Wasserkraftanlage oder einer Antriebsmaschine eines Schiffes oder eines Flugzeugs.

**Claims**

1. A universal propeller (1), comprising a hub (10) that is rotatably mounted on a shaft (20), wherein, on the hub (10),

    - there are two rotor blades (30) arranged opposite one another
    or
    - at least three rotor blades (30) arranged in a star configuration with respect to one another,
    - wherein on the hub (10) each rotor blade (30) is arranged, at the end of its longitudinal axis (31), at an angle $\alpha$ with respect to the central axis (21) of the shaft (20) in such a way that the longitudinal axis (31) of each rotor blade (30) when rotating through 360° describes the peripheral surface (71) of a right circular cone (70),
    - wherein the hub (10) comprises a timing gear (50) enabling the rotor blades (30) to be rotated about their longitudinal axis (31);
    - wherein arranged on each rotor blade (30) there is a gearwheel (52) that is directly operatively connected to a reference gearwheel (51) of the timing gear (50);
    - and wherein the timing gear (50) is operatively connected to a hub gear (12), wherein the hub gear (12) is configured to sense and process an angular velocity $\omega_n$ of a rotational movement of the hub (10);
    **characterized in**
    - **that** the reference gearwheel (51) is arranged centrally in the timing gear (50) and surrounded by the gearwheels (52) of the rotor blades (30), and the reference gearwheel (51) and the gearwheels (52) of the rotor blades (30) of the timing gear (50) are designed in such a way that the ratio of an angular velocity $\omega_r$ of the reference gearwheel (51) to the angular velocity $\omega_n$ of the rotational movement of the hub (10) is as follows: $\omega_r / \omega_n = 1 + (1/2)*(S_{rot} / S_r)$, where $S_{rot}$ = size of the gearwheels (52) of the rotor blades (30), and $S_r$ = size of the reference gearwheel (51);
    or
    - **that** the reference gearwheel (51) is arranged outside the center of the timing gear (50) and in turn surrounds the gearwheels (52) of the rotor blades (30), and the reference gearwheel (51) and the gearwheels (52) of the rotor blades (30) of the timing gear (50) are designed in such a way that the ratio of an angular velocity $\omega_r$ of the reference gearwheel (51) to the angular velocity $\omega_n$ of the rotational movement of the hub (10) is as follows: $\omega_r / \omega_n = 1 - (1/2)*(S_{rot} / S_r)$, where $S_{rot}$ = size of the gearwheels (52) of the rotor blades (30), and $S_r$ = size of the reference gearwheel (51).

2. The universal propeller (1) as claimed in claim 1, **characterized in that**,

    - the reference gearwheel (51), which is arranged outside the center of the timing gear (50) and in turn surrounds the gearwheels (52) of the rotor blades (30), is realized as a planetary wheel, a ring gear or a crown wheel.

3. The universal propeller (1) as claimed in claim 1 or 2, **characterized in that** the longitudinal axis (31) of each rotor blade (30) is arranged at an angle $\alpha$ of

    - between 30° and 60°,
    - or between 35° and 55°,
    - or between 40° and 50°,
    - or of 45°,

    with respect to the central axis (21) of the shaft (20).

4. The universal propeller (1) as claimed in any one of claims 1 to 3, **characterized in that**, when the hub (10) rotates about the shaft (20), at a first transit point (T1) each rotor blade (30) is in alignment with a perpendicular plane (x, z) of a three-dimensional coordinate system (x, y, z) relating to the universal propeller (1).

5. The universal propeller (1) as claimed in claim 4, **characterized in that**, at the first transit point (T1), the longitudinal axis (31) of each rotor blade (30) may have a vertical deviation of up to +/- 15° within the perpendicular plane (x, z).

6. The universal propeller (1) as claimed in any one of the preceding claims, **characterized in that**, when the hub (10) rotates about the shaft (20), at a third transit point (T3) each rotor blade is in alignment with a horizontal plane (x, y) of a three-dimensional coordinate system (x, y, z) relating to the universal propeller (1).

7. The universal propeller (1) as claimed in claim 6, **characterized in that**, at the third transit point (T3), the longitudinal axis (31) of each rotor blade (30) may have a horizontal deviation of up to +/- 15° outside the horizontal plane (x, y).

8. The universal propeller (1) as claimed in any one of the preceding claims, **characterized in that** each rotor blade (30), at least portionally, has two substantially flat upper sides (32), wherein preferably there are solar cells arranged on the flat upper sides (32) of each rotor blade (30).

9. The universal propeller (1) as claimed in one or more of the preceding claims, **characterized in that** the lateral edges (33) of each rotor blade (30) are rounded or conical.

10. The universal propeller (1) as claimed in one or more of the preceding claims, **characterized in that** mutually adjacent and/or mutually opposite rotor blades (30) are connected to each other by means of cables (40) that are preferably attached to the rotor blades (30) between a central and an end position, preferably in the region of or adjacent to their rotor blade tips (34).

11. The universal propeller (1) as claimed in one or more of the preceding claims, **characterized in that** the central axis (21) of the shaft (20) is arranged at an angle of between 0° and 360°, preferably of 45°, with respect to a horizontal (X) of a mounting coordinate system (X, Y, Z) relating to the universal propeller (1).

12. The universal propeller (1) as claimed in one or more of the preceding claims, **characterized in that** the hub gear (12) is designed as a planetary gear or as a simple toothed gear.

13. A method for operating a universal propeller (1) as claimed in one or more of the preceding claims, in which, by means of a timing gear (50), a rotation of the rotor blades (30) about their longitudinal axis (31) is effected in synchronism with the rotation of the rotor blades (30) through 360° along the peripheral surface (71) of a circular cone (70).

14. The method as claimed in claim 12, in which the rotational speed of the rotor blades (30) about their longitudinal axis (31) is half that of the rotational speed of the rotor blades (30) through 360° along the peripheral surface (71) of the circular cone (70).

15. A use of a universal propeller (1) as claimed in one or more of the preceding claims in a wind power installation, hydropower installation or an engine of a ship or an aircraft.


## Revendications

1. Hélice universelle (1) présentant un moyeu (10), qui est logé rotatif sur un arbre (20),

   - deux pales (30) de rotor étant agencées l'une en face de l'autre
   ou
   - au moins trois pales (30) de rotor étant agencées en étoile l'une par rapport à l'autre
   sur le moyeu (10),
   - chaque pale (30) de rotor étant agencée, en l'extrémité de son axe longitudinal, (31) sur le moyeu (10) sous un angle $\alpha$ par rapport à l'axe central (21) de l'arbre (20) de telle sorte que l'axe longitudinal (31) de chaque pale (30) de rotor décrit la surface d'enveloppe (71) d'un cône circulaire droit (70) lors d'une rotation sur 360°,
   - le moyeu (10) comprenant un mécanisme de commande (50) qui permet une rotation des pales (30) de rotor autour de leur axe longitudinal (31) ;
   - chaque pale de rotor (30) présentant une roue dentée (52) qui est en liaison active directe avec une roue dentée de référence (51) du mécanisme de commande (50) ;
   - et le mécanisme de commande (50) étant en liaison active avec un mécanisme (12) de moyeu, le mécanisme (12) de moyeu étant disposé pour absorber et traiter une vitesse angulaire $\omega_n$ d'un mouvement de rotation du moyeu (10) ;
   **caractérisée**
   - **en ce que** la roue dentée de référence (51) est agencée au centre du mécanisme de commande (50) et entourée par les roues dentées (52) des pales (30) de rotor et la roue dentée de référence (51) et les roues dentées (52) des pales (30) de rotor du mécanisme de commande (50) sont dimensionnées de telle sorte que le rapport d'une vitesse angulaire $\omega_r$ de la roue dentée de référence (51) à la vitesse angulaire $\omega_n$ du mouvement de rotation du moyeu (10) se comporte selon : $\omega_r / \omega_n = 1 + (1/2) * (S_{rot} / S_r)$ avec $S_{rot}$ = dimension des roues dentées (52) des pales (30) de rotor et $S_r$ = dimension de la roue dentée de référence (51) ;
   ou
   - **en ce que** la roue dentée de référence (51) est agencée à l'extérieur du centre du mécanisme de commande (50) et entoure pour sa part les roues dentées (52) des pales (30) de rotor et la roue dentée de référence (51) et les roues dentées (52) des pales (30) de rotor du mécanisme de commande (50) sont dimensionnées de telle sorte que le rapport d'une vitesse angulaire $\omega_r$ de la roue dentée de référence (51) à la vitesse angulaire $\omega_n$ du mouvement de rotation du moyeu (10) se comporte selon : $\omega_r / \omega_n = 1 - (1/2) * (S_{rot} / S_r)$ avec $S_{rot}$ = dimension des roues dentées (52) des pales (30) de rotor et $S_r$ = dimension de la roue dentée de référence (51) ;

2. Hélice universelle (1) selon la revendication 1, **caractérisée**

   - **en ce que** la roue dentée de référence (51), qui est agencée à l'extérieur du centre du mécanisme de commande (50) et entoure pour sa part les roues dentées (52) des pales (30) de rotor, est réalisée comme une roue satellite, une couronne dentée ou une roue en couronne.

3. Hélice universelle (1) selon l'une des revendications 1 ou 2, **caractérisée en ce que** les axes longitudinaux (31) de chaque pale (30) de rotor sont agencés sous un angle $\alpha$,

   - entre 30° et 60°,
   - ou entre 35° et 55°,
   - ou entre 40° et 50°,
   - ou de 45°,

   par rapport à l'axe central (21) de l'arbre (20).

4. Hélice universelle (1) selon l'une des revendications 1 à 3, **caractérisée en ce que** chaque pale (30) de rotor, lors de la rotation du moyeu (10) autour de l'arbre (20), au niveau d'un premier point de passage (T1), est alignée sur un plan vertical (x, z) d'un système de coordonnées spatiales (x, y, z) se référant à l'hélice universelle (1).

5. Hélice universelle (1) selon la revendication 4, **caractérisée en ce que**, au niveau du premier point de passage (T1), l'axe longitudinal (31) de chaque pale (30) de rotor peut présenter un écart vertical de jusqu'à +/-15° dans le plan vertical (x, z).

6. Hélice universelle (1) selon l'une des revendications précédentes, **caractérisée en ce que** chaque pale (30) de rotor, lors de la rotation du moyeu (10) autour de l'arbre (20), au niveau d'un troisième point de passage (T3), est alignée sur un plan horizontal (x, y) d'un système de coordonnées spatiales (x, y, z) se référant à l'hélice universelle (1).

7. Hélice universelle (1) selon la revendication 6, **caractérisée en ce que**, au niveau du troisième point de passage (T3), l'axe longitudinal (31) de chaque pale (30) de rotor peut présenter un écart horizontal de jusqu'à +/- 15° à l'extérieur du plan horizontal (x, y).

8. Hélice universelle (1) selon l'une des revendications précédentes, **caractérisée en ce que** chaque pale (30) de rotor présente, au moins par sections, deux faces supérieures (32) sensiblement planes, des cellules solaires étant de préférence agencées sur les faces supérieures (32) planes de chaque pale (30) de rotor.

9. Hélice universelle (1) selon l'une ou plusieurs des revendications précédentes, **caractérisée en ce que** les bords latéraux (33) de chaque pale (30) de rotor sont réalisés de manière arrondie ou conique.

10. Hélice universelle (1) selon l'une ou plusieurs des revendications précédentes, **caractérisée en ce que** des pales (30) de rotor situées les unes à côté des autres et/ou les unes en face des autres sont reliées les unes aux autres par l'intermédiaire de tirants à câble (40) qui sont de préférence installés entre une position centrale et une position côté extrémité sur la pale (30) de rotor, de préférence dans la zone de leurs pointes (34) de pale le rotor ou à proximité de celles-ci.

11. Hélice universelle (1) selon l'une ou plusieurs des revendications précédentes, **caractérisée en ce que** l'axe central (21) de l'arbre (20) est monté sous un angle situé entre 0° et 360°, de préférence de 45°, par rapport à une horizontale (X) d'un système de coordonnées de montage (X, Y, Z) se référant à l'hélice universelle (1).

12. Hélice universelle (1) selon l'une ou plusieurs des revendications précédentes, **caractérisée en ce que** le mécanisme (12) de moyeu est conçu comme un engrenage planétaire ou comme un engrenage simple à roues dentées.

**13.** Procédé de fonctionnement d'une hélice universelle (1) selon l'une ou plusieurs des revendications précédentes, dans lequel une rotation des pales (30) de rotor autour de leur axe longitudinal (31) s'effectue de manière synchrone par rapport à la rotation des pales (30) de rotor sur 360° le long de la surface d'enveloppe (71) d'un cône circulaire (70) par l'intermédiaire d'un mécanisme de commande (50).

**14.** Procédé selon la revendication 13, dans lequel la vitesse de rotation des pales (30) de rotor autour de leur axe longitudinal (31) représente la moitié de la vitesse de rotation des pales (30) de rotor sur 360° le long de la surface d'enveloppe (71) du cône circulaire (70).

**15.** Utilisation d'une hélice universelle (1) selon l'une ou plusieurs des revendications précédentes dans une installation éolienne, une installation hydroélectrique ou une machine d'entraînement d'un navire ou d'un avion.

EP 4 189 235 B1

Fig. 1

Fig. 2

# Fig. 3

# Fig. 4

# Fig. 5

Fig. 6

Fig. 7

## Fig. 8

## Fig. 9  Fig. 9a  Fig. 9b  Fig. 9c

Fig. 10

Fig. 11

## Fig. 12

## Fig. 13

## Fig. 14

## Fig. 15

## Fig. 16

## Fig. 17

## Fig. 18

# Fig. 19

Stand der Technik

Fig. 20

EP 4 189 235 B1

Fig. 21

EP 4 189 235 B1

**IN DER BESCHREIBUNG AUFGEFÜHRTE DOKUMENTE**

**In der Beschreibung aufgeführte Patentdokumente**

- EP 1626176 A2
- WO 2017187229 A1
- US 4355956 A
- US 20110076144 A1
- WO 2014188289 A1
- CN 105863957 A
- GB 2495745 A
- FR 1021252 A
- WO 03062671 A1